# EUROPÄISCHE PATENTSCHRIFT

(11) **EP 3 589 505 B1**
(45) Veröffentlichungstag und Bekanntmachung des Hinweises auf die Patenterteilung: **04.05.2022**
(21) Anmeldenummer: 18712093.6
(22) Anmeldetag: 05.03.2018
(51) Int. Cl.: B60C 23/12, B60C 23/00

(54) **VERDICHTERANORDNUNG MIT MAGNETKOPPLUNG**
COMPRESSOR ASSEMBLY WITH MAGNETIC COUPLING
ENSEMBLE COMPRESSEUR AVEC ACCOUPLEMENT MAGNÉTIQUE

(30) Priorität: 03.03.2017 DE 102017002083; 29.03.2017 DE 102017106805
(43) Veröffentlichungstag der Anmeldung: 08.01.2020
(73) Patentinhaber: KT Projektentwicklungs-GmbH, 74072 Heilbronn (DE); Illinois Tool Works INC., Glenview, IL 60025 (US)
(72) Erfinder: TSIBERIDIS, Konstantin, 74076 Heilbronn (DE)
(74) Vertreter: Trinks, Ole
(86) Internationale Anmeldenummer: PCT/EP2018/055369
(87) Internationale Veröffentlichungsnummer: WO 2018/158466

(56) Entgegenhaltungen:
- WO-A1-2018/096109
- WO-A1-2018/096111
- DE-U1-202014 010 520
- US-A1- 2015 191 058
- US-A1- 2016 288 592

## Beschreibung

Die Erfindung betrifft eine Verdichteranordnung zur Druckmittelversorgung einer Reifenkavität eines Reifens eines auf einer Radnabe montierbaren Fahrzeugrads, nach dem Oberbegriff des Anspruchs 1.

Die Druckschrift WO 2018/096109 A1 , die zum Stand der Technik nach 54(3) EPÜ gehört, betrifft eine Verdichteranordnung zur Druckmittelversorgung einer Reifenkavität eines Reifens eines auf einer Radnabe montierten Fahrzeugrads, wobei die Radnabe um eine Rotationsachse drehbar an einem Radträger gelagert ist.

Das Dokument WO 2018/096111 A1, das gemäß 54(3) EPÜ zum Stand der Technik gehört, offenbart eine ähnliche Verdichteranordung wie die vorliegende Anmeldung. Z

Die Reifenkavität des Reifens ist also Teil eines auf einer Radnabe montierbaren Fahrzeugrads, wobei die Radnabe um eine Rotationsachse drehbar an einem Radträger gelagert ist.

Zur Befüllung einer Reifenkavität eines Fahrzeugreifens mit 35 einem Druckmittel, wie etwa Druckluft, ist es bekannt, ein Reifenventil am Fahrzeugrad vorzusehen, über welches das Druckmittel in die Reifenkavität eingebracht werden kann. Bei Fahrzeugen, wie Personenkraftwagen, Lastkraftwagen oder Nutzfahrzeugen, sind Reifenventile üblicherweise im Bereich einer Felge, auf der der Reifen montiert ist, so angeordnet, dass sie von außen leicht zugänglich sind.

An das Reifenventil kann eine fahrzeugexterne Druckmittelquelle angeschlossen werden, etwa mittels einer Schlauchleitung, um so den Reifendruck, insbesondere auf manuelle Weise, kontrollieren und gegebenenfalls korrigieren zu können.

Ferner sind fahrzeugseitige Druckmittelversorgungssysteme bekannt, die es gestatten, die Druckmittelbefüllung der Reifenkavität eines Fahrzeugreifens autonom vorzunehmen. Hierzu ist es bekannt von einer zentralen, fahrzeugseitig bereitgestellten Druckmittelquelle, beispielsweise einem Kompressor oder einem Druckspeicher, Druckmittelleitungen bis zu den Rädern vorzusehen und in die Reifenkavität zu führen. Beim Übergang von gegenüber dem Fahrzeug drehfesten Bauteilen, wie dem Radträger, auf die sich im Fahrbetreib drehenden Räder werden sogenannte Drehdurchführungen realisiert, die eine Druckmittelbefüllung auch während der Fahrt, d.h. bei sich drehenden Rädern, ermöglichen. Auf diese Weise kann der Reifendruck z.B. an veränderte Beladungsverhältnisse, Fahrbahnoberflächen und Umgebungstemperaturen angepasst werden oder Leckagen bspw. über Diffusion ausgeglichen werden.

Ein Problem der bekannten Systeme ist, dass bei fahrzeugexternen Druckmittelquellen jeweils gehalten und der Druck in allen Reifenkavitäten aufwändig geprüft bzw. korrigiert werden muss. Bei den bekannten fahrzeugseitigen Druckmittelquellen, die über Drehdurchführungen Druckmittel an die Reifenkavität fördern, stellt die Betriebssicherheit der Drehdurchführungen für das Druckmittel ein Problem dar. Die Drehdurchführungen lassen sich nur mit sehr hohem Aufwand derart robust und langlebig fertigen, dass sie ein Fahrzeugleben lang halten, was teuer und unwirtschaftlich ist.

Aufgabe der vorliegenden Erfindung ist es, eine Verdichteranordnung zu schaffen, die zuverlässig und wartungsarm über ein gesamtes Fahrzeugleben hinweg eine Befüllung der Reifenkavität mit Druckmittel sicherstellt.

Diese Aufgabe wird durch eine Verdichteranordnung nach Anspruch 1 gelöst. Demgemäß umfasst die Verdichteranordnung einen nabenseitigen Kompressionsraum und ein Verdichterbauteil, wobei ein in die Reifenkavität zu leitendes Druckmittel in dem Kompressionsraum durch oszillierende translatorische Bewegung des Verdichterbauteils unter Druck setzbar ist,
und wobei die Verdichteranordnung ein Getriebe, vorzugsweise ein Kurvengetriebe, umfasst, das eingerichtet ist, um eine Rotationsbewegung zwischen Radträgerseite und Radnabenseite in eine oszillierende translatorische Bewegung des Verdichterbauteils umzuwandeln, wenn ein
nabenseitiges Getriebeteil mit einem radträgerseitigen Getriebeteil in einer Wirkstellung steht.

Steht das radträgerseitige Getriebeteil mit dem nabenseitigen Getriebeteil in der Wirkstellung, so befindet sich die Verdichteranordnung im Betrieb. Das Verdichterbauteil bewegt sich oszillierend translatorisch zwischen einem oberen Totpunkt, der das Ende eines Förderhubs darstellt, und einem unteren Totpunkt, der das Ende eines Saughubs darstellt, hin und her.

Wird das nabenseitige Getriebeteil aus der Wirkstellung mit dem radträgerseitigen Getriebeteil gebracht, so stellt die Verdichteranordnung den Betrieb ein. Das Verdichterbauteil wird dann nicht mehr durch die rotatorische Relativbewegung zwischen Radnabenseite und Radträgerseite angetrieben.

Die translatorische Bewegung des Verdichterbauteils erfolgt vorzugsweise entweder in radialer Richtung oder in axialer Richtung. Derartige Verdichteranordnungen können in der jeweils anderen Richtungen sehr kompakt ausgeführt werden, was je nach Einbaulage gewünscht sein kann. Es ist jedoch auch möglich, dass das Verdichterbauteil eine translatorische Bewegung ausführt die lediglich eine Komponente in radialer Richtung oder in axialer Richtung aufweist.

Die Verdichteranordnung kann mehrere Verdichterbauteile aufweisen, insbesondere wenn die Bewegung der Verdichterbauteile in radialer Richtung erfolgt. Hierdurch kann die Förderleistung der Verdichteranordnung erhöht werden.

Bevorzugterweise ist die Verdichteranordnung ringartig ausgebildet und weist mehrere in Umfangsrichtung verteilt angeordnete Kompressionsräume auf, in denen jeweils ein Verdichterbauteil angeordnet ist und zwar derart, dass es in einer oszillierenden translatorischen Bewegung in radialer Richtung bewegbar ist. Vorteilhafterweise sind die einzelnen Verdichterbauteile ähnlich einem Kolben ausgeführt und weisen einen nach radial innen oder nach radial aussen zeigenden Fortsatz auf, dieser Fortsatz bildet bevorzugt gleichzeitig das nabenseitige Getriebeteil. Das nabenseitige Getriebeteil kann in eine Wirkstellung mit einer Kurvenbahn, vorzugsweise einer Außenkontur oder einer Innenkontur einer Kurvenbahn, die auf der Radträgerseite angebracht ist, gebracht werden, Die Kurvenbahn bildet dabei das radträgerseitige Getriebeteil.

Allgemein ist das Getriebe vorzugsweise ein Kurvengetriebe. Bei einem Verdichterbauteil dass eine Bewegung in radialer Richtung bzw. mit einer Komponente in radialer Richtung ausführt kann das radträgerseitige Getriebeteil innenliegend angeordnet sein, es kann also auf seiner Außenkontur eine Kurvenbahn aufweisen. Alternativ dazu kann das radträgerseitige Getriebeteil außenliegend angeordnet sein, es kann also auf seiner Innenkontur eine Kurvenbahn aufweisen.

Ist die Verdichteranordnung derart ausgebildet, dass das Verdichterbauteil sich ganz oder überwiegend in axialer Richtung bewegt, so kann das Verdichterbauteil als Ringkolben oder als Flächenkolben ausgeführt sein. Eine Ausführung als Ringkolben ermöglicht eine kompakte Bauform. Eine Ausführung als Ringkolben ermöglicht hohe Förderleistungen.

Ein sich in axialer Richtung bewegendes Verdichterbauteil kann an Seiner dem Kompressionsraum abgewandten Seite eine Kurvenbahn aufweisen, die das nabenseitige Getriebeteil bildet. Das radträgerseitige Getriebeteil kann ebenso als eine Kurvenbahn ausgebildet sein. Das radträgerseitige Getriebeteil kann jedoch auch als Stößelantrieb ausgebildet sein. Es ist auch eine Konfiguration denkbar, bei der das radträgerseitige Getriebeteil eine Kurvenbahn aufweist, bzw. durch selbige gebildet ist, und das nabenseitige Getriebeteil als Stößelabtrieb ausgebildet ist.

Vorzugsweise ist im Kontaktbereich zwischen nabenseitigem Getriebeteil und dem radträgerseitigen Getriebeteil wenigstens eine Rolle angeordnet. Diese Rolle kann am nabenseitigen Getriebeteil oder am radträgerseitigen Getriebeteil angeordnet sein. Beispielsweise kann das nabenseitige Getriebeteil als Stößelabtrieb in Form eines Rollenstößels ausgebildet sein.

Vorteilhaft ist, wenn in der Begrenzung des Kompressionsraums, vorzugsweise in einem den Kompressionsraum begrenzenden Deckelabschnitt, ein Druckmittelauslass, der mit einem Totraumvolumen des Kompressionsraums verbunden ist, angeordnet ist, wobei der Druckmittelauslass über einen Leitungsabschnitt, vorzugsweise in dem ein Rückschlagventil angeordnet ist, mit der Reifenkavität verbindbar ist, und wobei der Leitungsabschnitt mit einem Entlastungsventil verbunden ist, über das der Leitungsabschnitt druckentlastbar ist. Mit Deckelabschnitt ist dabei vorliegend der Bereich der Wandung des Kompressionsraums gemeint, der den Kompressionsraum auch noch begrenzt, wenn sich das Verdichterbauteil in einem oberen Totpunkt befindet. Anders ausgedrückt, der Deckelabschnitt ist der Teil der Wandung des Kompressionsraums, der das Totraumvolumen begrenzt. Durch den Druckmittelauslass, der mit dem druckentlastbaren Leitungsabschnitt verbunden ist, lässt sich das Totraumvolumen des Kompressionsraums als pneumatische Feder nutzen, die das Verdichterbauteil aus seiner Stellung im oberen Totpunkt zur Initiierung des Saughubs bewegt. Soll das Verdichterbauteil im oberen Totpunkt verbleiben, so kann der Leitungsabschnitt druckentlastet werden und die pneumatische Federwirkung bleibt aus. Das Verdichterbauteil kann dann beispielsweise über Fliehkräfte oder auch über eine magnetbasierte Entkoppeleinrichtung, auf die später noch im Detail eingegangen wird, in der Stellung des oberen Totpunkts gehalten werden.

Vorteilhaft ist, wenn ein Druckraum mit einem Druckmitteleinlass vorgesehen ist, wobei das Verdichterbauteil derart einen Teil einer Begrenzung des Druckraums bildet, dass das Verdichterbauteil durch Zuführung eines Druckstoßes in den Druckraum bewegbar ist. Über den Druckmitteleinlass kann unter Druck stehendes Druckmittel aus einem Druckspeicher, beispielsweise der Reifenkavität, dem Druckraum zugeführt werden. Hierdurch kann das Verdichterbauteil bewegt werden. Dies kann beispielsweise genutzt werden, um die Verdichteranordnung in Gang zu setzen, bzw. um das nabenseitige Getriebeteil in Wirkstellung mit dem radträgerseitigen Getriebeteil zu bringen.

Der Druckraum kann der Kompressionsraum sein. Der Druckmitteleinlass ist dann vorteilhafterweise im Deckelabschnitt der Begrenzung des Kompressionsraums angeordnet.

Vorteilhafterweise kann der Druckraum pneumatisch getrennt von dem Kompressionsraum ausgebildet sein. Der Druck im Druckraum ist dann also unabhängig von dem Druck im Kompressionsraum. Vorzugsweise ist der Druckraum in dem Verdichterbauteil und/oder in dem nabenseitigen Getriebeteil angeordnet.

Es versteht sich, dass allgemein im Bereich des Kompressionsraums aber bei entsprechenden Ausführungsformen auch im Bereich des Druckraums entsprechende Dichtungen vorgesehen sind.

Vorteilhafterweise ist der Druckraum verschließbar. Damit ist gemeint, dass dem Druckraum unter Druck stehendes Druckmittel über den Druckmitteleinlass zugeführt werden kann und der Druckraum dann pneumatisch dicht verschließbar ist, so dass der Druck im Druckraum erhalten bleibt. Dies kann beispielsweise über ein Magnetventil oder andersartig ausgebildetes, vorzugsweise aktuierbares, Ventil ausgeführt werden.

Der Druckraum kann den Druckmitteleinlass, insbesondere mit einem Ventil, aufweisen und separat davon einen Auslass, vorzugsweise mit einem separaten Ventil. Der Druckmitteleinlass kann jedoch auch mit einem Ventil ausgebildet sein, das sowohl zur Zuführung eines Druckstoßes in den Druckraum sowie zur Druckentlastung des Druckraums ausgebildet ist.

Bevorzugt ist, wenn ein, insbesondere stabartiges, Führungselement sich in das Verdichterbauteil erstreckt. Ein derartiges Führungselement führt die Bewegung des Verdichterbauteils und sichert dieses gegen ein Verkippen ab.

Vorzugsweise ist der Druckmitteleinlass an dem stabartigen Führungselement angeordnet. Im Verdichterbauteil kann beispielsweise ein Hohlraum zur Bildung des Druckraums vorgesehen sein. Das stabartige Führungselement kann in diesen Hohlraum hineinragen und gleichzeitig den Druckmitteleinlass umfassen. Der Druckmitteleinlass kann jedoch auch, wenigstens bereichsweise, zwischen dem Verdichterbauteil und dem Führungselement verlaufen, beispielsweise in einer Nut. Der Druckraum ist vorteilhafterweise gegenüber dem Führungselement abgedichtet. Bei Beaufschlagung des Druckraums mit Druck bewegt sich das Verdichterbauteil entlang des Führungselements, beispielsweise aus dem oberen Totpunkt in den unteren Totpunkt. Wird der Druckraum geschlossen, so nimmt bei dieser Bewegung der Druck im Druckraum ab, da sich sein Volumen vergrößert. Wird der Druckraum geschlossen, so baut sich bei der Rückkehr des Verdichterbauteils in den oberen Totpunkt wieder Druck im Druckraum auf. Der Druckraum bzw. das darin eingeschlossene unter Druck stehende Druckmittel wirkt als pneumatische Feder. Ist diese Federwirkung nicht mehr gewünscht, so kann der Druckraum druckentlastet werden.

Ein Führungselement ist besonders bevorzugt bei einem Verdichterbauteil vorgesehen, das für eine Bewegung in radialer Richtung ausgelegt ist.

Vorteilhaft ist, wenn wenigstens zwei, insbesondere stabartige, Führungselemente sich in das Verdichterbauteil erstrecken. Die Führungselemente bilden damit eine Verdrehsicherung für das Verdichterbauteil und gewährleisten eine sichere Führung des Verdichterbauteils, wobei ein Verkippen des Verdichterbauteils ausgeschlossen ist.

Vorteilhaft ist, wenn in dem stabartigen Führungselement ein Zuleitungsabschnitt verläuft, der in den Druckmitteleinlass mündet. Der Druckraum kann damit in einfacher Weise mit Druckmittel versorgt werden. Das Führungselement kann in einfacher Weise beispielsweise als hohlgebohrter Stift hergestellt werden.

Bevorzugterweise bildet das Führungselement einen Teil der Begrenzung des Druckraums.

Vorteilhaft ist auch, wenn das Führungselement eine Verdrehsicherung für das Verdichterbauteil bildet, vorzugsweise wobei das Führungselement einen unrunden, insbesondere ovalen Querschnitt aufweist. Das Verdichterbauteil ist dann durch das Führungselement nicht nur geführt und an einem Verkippen gehindert werden, sondern auch an einem Verdrehen gehindert werden.

Erfindungsgemäß umfasst die Verdichteranordnung eine magnetbasierte Entkoppeleinrichtung, über die das nabenseitige Getriebeteil aus der Wirkstellung mit dem radträgerseitigen Getriebeteil gehalten werden kann und/oder aus der Wirkstellung mit dem radträgerseitigen Getriebeteil bringbar ist.

Hierzu kann die Entkoppeleinrichtung eine schaltbare Magnetanordnung enthalten. Ein Beispiel für eine derartige schaltbare Magnetanordnung ist beispielsweise ein Elektromagnet. Ein solcher Elektromagnet kann dabei derart ausgebildet sein, dass er bei Bestromung magnetisch ist. Alternativ hierzu kann er auch derart ausgebildet sein, dass er bei Bestromung entmagnetisiert ist. Eine schaltbare Magnetanordnung kann auch derart ausgebildet sein, dass eine Formation von Permanentmagneten durch eine Bewegung, bspw. eine Verdrehung, gegenüber einer zweiten Formation von Permanentmagneten von einer anziehenden auf eine abstoßende Wirkung bzw. umgekehrt gebracht werden kann. Beispielsweise können vier Permanentmagneten in einer ringartigen Formation angeordnet sein, wobei die Permanentmagneten jeweils abwechselnd bezüglich ihrer Polung ausgerichtet sind. Eine zweite Formation von Permanentmagneten kann entsprechend ausgebildet sein. Liegen sich nun die Permanentmagneten der beiden Formationen derart gegenüber, dass sich jeweils gleichpolige Magneten einander gegenüberliegenden, so stoßen sich die Magnetanordnungen ab. Wird eine der beiden Magnetformationen bspw. um 90° verdreht, so liegen sich jeweils unterschiedlich polige Magneten gegenüber und die beiden Magnetformationen ziehen sich an. Andere Arten von Magnetformationen sind ebenso denkbar. Beispielsweise können unterschiedlich gepolte Permanentmagneten in einer Reihe angeordnet sein und durch translatorische Bewegung gegenüber einer zweiten Magnetformation von in einer Reihe angeordneten Permanentmagneten zwischen abstoßend und anziehend schaltbar sein.

Generell ist unter einer schaltbaren Magnetanordnung eine Einrichtung zu verstehen, bei der Magnetkraft zwischen abstoßend und anziehend oder zwischen abstoßend und neutral oder zwischen anziehend und neutral schaltbar ist.

Bei den oben beschriebenen Ausführungen der schaltbaren Magnetanordnung mit zwei Magnetformationen kann dann eine erste Magnetformation an dem Verdichterbauteil eine zweite Magnetformation an dem Deckelabschnitts des Kompressionsraums angeordnet sein. Soll die Verdichteranordnung betrieben werden, so kann die Magnetanordnung auf neutral oder abstoßend geschaltet sein. Soll die Verdichteranordnung außer Betrieb sein, also das nabenseitige Getriebeteil aus der Wirkstellung mit dem radträgerseitigen Getriebeteil gebracht werden, so kann die Magnetanordnungen auf anziehend gestellt werden. Durch die Anziehung wird das Verdichterbauteil im oberen Totpunkt im Bereich des Deckelabschnitts gehalten.

Die Entkoppeleinrichtung kann jedoch auch durch einen Permanentmagneten, der beispielsweise im Deckelabschnitt oder im Verdichterbauteil selbst angeordnet ist ausgebildet sein. Bei einer derartigen Entkoppeleinrichtung wirkt die Magnetkraft quasi ständig. Wird jedoch eine derartige Entkoppeleinrichtung beispielsweise mit der oben beschriebenen pneumatischen Feder, die durch den Druckraum gebildet wird, kombiniert, so vermag die Entkoppeleinrichtung das Verdichterbauteil nur im oberen Totpunkt zu halten, wenn der Druckraum druckentlastet ist und damit keine pneumatische Federwirkung gegeben ist.

Die Entkoppeleinrichtung kann auch ausgebildet sein, um das radträgerseitige Getriebeteil zu bewegen oder zu halten. Mit anderen Worten die Magnetkraft bei dieser Ausführungsform wirkt auf das radträgerseitige Getriebeteil, um es zu bewegen bzw. zu halten.

Alternativ oder zusätzlich zu der magnetbasierten Entkoppeleinrichtung umfasst die erfindungsgemäße Verdichteranordnung eine magnetbasierte Einkoppeleinrichtung, über die das nabenseitige Getriebeteil in der Wirkstellung mit dem radträgerseitigen Getriebeteil gehalten werden kann und/oder in die Wirkstellung mit dem radträgerseitigen Getriebeteil bringbar ist. Hierzu kann beispielsweise eine schaltbare Magnetanordnung in dem radträgerseitigen Getriebeteil, bzw. in dem radträgerseitigen Getriebeteil und dem nabenseitigen Getriebeteil angeordnet sein. Soll die Verdichteranordnung ihren Betrieb aufnehmen, so kann diese schaltbare Magnetanordnung derart geschaltet werden, dass sich das radträgerseitige Getriebeteil und das nabenseitige Getriebeteil anziehen und in die Wirkstellung übergehen oder in dieser Wirkstellung verbleiben, wenn sie einmal in Kontakt sind. Dieses Herbeiführen des ersten Kontakts kann beispielsweise über den weiter oben beschriebenen Druckraum erfolgen.

Die Einkoppeleinrichtung kann ausgebildet sein, um das radträgerseitige Getriebeteil zu bewegen oder zu halten. Mit anderen Worten die Magnetkraft bei dieser Ausführungsform wirkt auf das radträgerseitige Getriebeteil, um es zu bewegen bzw. zu halten.

Die Einkoppeleinrichtung kann durch einen Permanentmagneten, der im radträgerseitigen Getriebeteil oder im nabenseitigen Getriebeteil angeordnet ist, ausgebildet sein. Bei einer derartigen Einkoppeleinrichtung wirkt die Magnetkraft quasi ständig. Wird jedoch eine derartige Einkoppeleinrichtung mit einer Entkoppeleinrichtung, wie weiter oben beschreiben kombiniert, so vermag die Einkoppeleinrichtung das radträgerseitige Getriebeteil und das nabenseitige Getriebeteil nur in der Wirkstellung zu halten, wenn die Entkoppeleinrichtung nicht betätigt ist.

Von Vorteil ist auch, wenn die Entkoppeleinrichtung und/oder die Einkoppeleinrichtung ausgebildet und angeordnet ist, um über Magnetkraft das Verdichterbauteil derart zu halten und/oder zu bewegen, dass die Stellung des nabenseitigen Getriebeteils hierdurch beeinflussbar ist. Bei dieser Ausführungsform wirken also die Entkoppeleinrichtung und/oder die Einkoppeleinrichtung nicht direkt auf das nabenseitige Getriebeteil sondern auf das Verdichterbauteil, welches wiederum mit dem nabenseitigen Getriebeteil verbunden ist.

Insbesondere die Einkoppeleinrichtung kann vorteilhafterweise ausgebildet und angeordnet sein, um über Magnetkraft das nabenseitige Getriebeteil direkt in der Wirkstellung zu halten und/oder in die Wirkstellung zu bewegen.

Vorzugsweise werden durch die Entkoppeleinrichtung und/oder die Einkoppeleinrichtung das Verdichterbauteil und/oder das nabenseitige Getriebeteil direkt mit Magnetkraft beeinflusst.

Von Vorteil ist auch, wenn ein Translator einer Generatoranordnung vorgesehen ist, wobei die Generatoranordnung durch oszillierende translatorische Bewegung des Translators elektrische Energie erzeugt, wobei die Verdichteranordnung ein Generatorgetriebe umfasst, das eingerichtet ist, um eine Rotationsbewegung zwischen Radträgerseite und Radnabenseite in eine oszillierende translatorische Bewegung des Translators umzuwandeln, wenn ein radträgerseitiges Generatorgetriebeteil mit einem nabenseitigen Generatorgetriebeteil in einer Wirkstellung steht, vorzugsweise wobei das Generatorgetriebe unabhängig von dem Getriebe betätigbar ist. Von Vorteil ist, wenn das nabenseitige Generatorgetriebeteil elektrisch in und aus der Wirkstellung bewegbar ist. Die Generatoranordnung kann dazu genutzt werden elektrische Energie zu erzeugen, die beispielsweise für Sensor oder für eine Schaltung der Verdichteranordnung genutzt wird. Vorzugsweise umfasst die Verdichteranordnung einen Energiespeicher, beispielsweise einen Akkumulator, der über die Generatoranordnung mit Energie gespeist werden kann. Bevorzugt ist eine Ausführungsform, bei der das nabenseitige Generatorgetriebeteil automatisiert in die Wirkstellung mit dem radträgerseitigen Generatorgetriebeteil überführt wird, sobald die gespeicherte Energie im Energiespeicher einen unteren Schwellenwert unterschreitet. Damit ist sichergestellt, stets genügend Energie im Energiespeicher vorhanden ist.

Von Vorteil ist auch, wenn das Verdichterbauteil plattenartig ausgebildet ist, vorzugsweise wobei eine Unterseite des plattenartigen Verdichterbauteil das nabenseitige Getriebeteil bildet. Eine derartige Verdichteranordnung kann besonders kompakt ausgebildet sein. Bevorzugt wird ein derartiges plattenartiges Verdichterbauteil mit dem weiter oben beschriebenen Führungselement kombiniert.

Das Verdichterbauteil kann generell einen Führungsabschnitt, vorzugsweise an seinem dem oberen Totpunkt abgewandten Ende, aufweisen. Ein derartiger Führungsabschnitt ist normalerweise derart ausgebildet, dass er ein Verkippen und oder ein Verdrehen des Verdichterbauteils gegenüber der Wandung des Kompressionsraums verhindert. Beispielsweise kann in der Wandung des Kompressionsraums eine Nut und an dem Verdichterbauteil ein entsprechender Fortsatz vorgesehen sein. Bevorzugt ist, wenn dieser Führungsabschnitt, bzw. dessen Teil in der Wandung des Kompressionsraums, außerhalb des Bereichs zwischen oberen und unteren Totpunkt der Wandung des Kompressionsraums angeordnet ist.

Von Vorteil ist, wenn das Verdichterbauteil einstückig verbunden mit dem nabenseitigen Getriebeteil ausgebildet ist. Hierdurch wird die Verdichteranordnung besonders robust.

Von Vorteil ist, wenn in dem Verdichterbauteil ein Permanentmagnet angeordnet ist, oder wenn das Verdichterbauteil ein ferromagnetisches Material umfasst. Hierdurch können in einfacher Art und Weise beispielsweise die Entkoppeleinrichtung und/oder die Einkoppeleinrichtung realisiert werden, indem entsprechende Magneten oder Magnetanordnungen in der Wandung des Kompressionsraums entsprechend angeordnet sind.

Von Vorteil ist, wenn ein Permanentmagnet in einem der Getriebeteile angeordnet ist und das andere Getriebeteil ein ferromagnetisches Material umfasst oder ebenso einen Permanentmagnet mit entgegengesetzter Polung, so dass sich die beiden Getriebeteile quasi anziehen. Diese Ausführungsform kann mit einer entsprechend stark ausgebildeten Entkoppeleinrichtung ausgeführt sein.

Von Vorteil ist, wenn in einer umfänglichen Wandung des Kompressionsraums wenigstens ein Permanentmagnet, vorzugsweise eine Reihe von Permanentmagneten, angeordnet ist. Dieser Permanentmagnet bzw. die Reihe von Permanentmagneten kann/können die Bewegung des Verdichterbauteils im Kompressionsraum unterstützen. Dazu sind die Permanentmagneten vorzugsweise ringförmig ausgebildet.

Von Vorteil ist, wenn an dem Verdichterbauteil und/oder an der Begrenzung des Kompressionsraums ein Flatterventil, derart angeordnet ist, dass es in einem Saughub des Verdichterbauteils geöffnet ist und in einem Förderhub des Verdichterbauteils geschlossen ist.

Von Vorteil ist, wenn das radträgerseitige Getriebeteil eine Scheibennutkurve und/oder eine Scheibenwulstkurve, vorzugsweise mit einem Weichenabschnitt und mit einer Arbeitsbahn und einer Freilaufbahn, die über den Weichenabschnitt verbunden sind, umfasst. Hierdurch kann das nabenseitige Getriebeteil quasi zwangsgeführt werden. Eine Scheibennutkurve ist dabei eine Kurvenbahn, die in Form einer Nut ausgeführt ist. In diese Nut greift ein Eingriffselement des nabenseitigen Getriebeteils ein. Hierdurch wird eine Zwangsführung des nabenseitigen Getriebeteils erreicht. Entsprechend ist eine Scheibenwulstkurve eine Kurvenbahn in Form einer Wulst. Bei einer derartigen Scheibenwulstkurve greift bzw. umgreift das nabenseitige Getriebeteil von oben und unten bzw. von beiden Seiten die Wulst und ist damit ebenso zwangsgeführt. Eine Arbeitsbahn ist dabei ein Abschnitt der Kurvenbahn, in dem die Kurvenbahn derart ungleichförmig ist, dass das in Eingriff stehende nabenseitige Getriebeteil bewegt wird. Im Gegensatz zur Arbeitsbahn steht die Freilaufbahn. Mit einer Freilaufbahn ist ein Abschnitt der Kurvenbahn gemeint, in dem die Kurvenbahn derart gleichförmig ist, dass das nabenseitige Getriebeteil nicht bewegt wird, auch wenn es in Eingriff mit der Freilaufbahn steht. Um ein Aufnehmen bzw. Beenden des Betriebs der Verdichteranordnung zu ermöglichen, verfügt die Kurvenbahn über den Weichenabschnitt. Durch einen geeigneten Steuerimpuls kann das nabenseitige Getriebeteil über den Weichenabschnitt von der Freilaufbahn in die Arbeitsbahn gebracht werden bzw. von der Arbeitsbahn in die Freilaufbahn.

Bevorzugt ist, wenn das Verdichterbauteil als Doppelkolben ausgebildet ist. Hierdurch kann die Pumpleistung der Verdichteranordnung erhöht werden.

Die vorliegende Anmeldung betrifft in einem zweiten Aspekt auch eine Verdichteranordnung, zur Druckmittelversorgung einer Reifenkavität eines Reifens eines auf einer Radnabe montierbaren Fahrzeugrads, wobei die Radnabe um eine Rotationsachse drehbar an einem Radträger gelagert ist, die sich dadurch kennzeichnet, dass die Verdichteranordnung wenigstens einen nabenseitigen Kompressionsraum und ein Verdichterbauteil umfasst, wobei ein in die Reifenkavität zu leitendes Druckmittel in dem nabenseitigen Kompressionsraum durch Bewegung des Verdichterbauteils unter Druck setzbar ist, wobei die Verdichteranordnung in Getriebe, vorzugsweise ein Kurvengetriebe, umfasst, das eingerichtet ist, um durch ein Zusammenwirken eines radträgerseitigen Getriebeteils mit einem nabenseitigen Getriebeteil eine Rotationsbewegung zwischen Radträgerseite und Radnabenseite in eine, vorzugsweise oszillierende translatorische, Bewegung des Verdichterbauteils umzuwandeln, wobei die Verdichteranordnung eine Kupplungseinrichtung umfasst, die ausgebildet ist, um das nabenseitige Getriebeteil direkt mittels Magnetkraft in eine oder aus einer Wirkstellung, in der es mit dem radträgerseitigen Getriebeteil zusammenwirkt, zu bewegen oder das nabenseitige Getriebeteil direkt mittels Magnetkraft in oder aus der Wirkstellung zu halten.

Dabei betreffen die weiter oben beschriebenen vorteilhaften Ausführungsformen des ersten Aspekts auch die Verdichteranordnung gemäß dem eben genannten und hier nachfolgend beschriebenen zweiten Aspekt.

Bei der Verdichteranordnung gemäß diesem zweiten Aspekt ist mit dem Begriff "direkt durch Magnetkraft" dabei gemeint, dass das Halten oder die Bewegung des nabenseitigen Getriebeteils direkt durch die Magnetkraft verursacht ist und nicht ein weiteres unabhängig von dem nabenseitigen Getriebeteil bewegbares Element durch die Magnetkraft bewegt oder gehalten wird und dieses Element dann beispielsweise durch Kraft oder Form Schluss das nabenseitige Getriebeteil bewegt oder hält.

Die Magnetkraft wirkt bei der Verdichteranordnung gemäß diesem zweiten Aspekt also direkt auf das nabenseitige Getriebeteil oder auf ein einstückig bzw. starr mit diesem verbundenes Element.

Bevorzugterweise ist die Verdichteranordnung gemäß diesem zweiten Aspekt ringartig ausgebildet und weist mehrere in Umfangsrichtung verteilt angeordnete Kompressionsräume auf, in denen jeweils ein Verdichterbauteil angeordnet ist und zwar derart, dass es in einer oszillierenden translatorischen Bewegung in radialer Richtung bewegbar ist. Vorteilhafterweise sind die einzelnen Verdichterbauteile ähnlich einem Kolben ausgeführt und weisen einen nach radial innen zeigenden Fortsatz auf, dieser Fortsatz bildet bevorzugt gleichzeitig das nabenseitige Getriebeteil. Das nabenseitige Getriebeteil kann in eine Wirkstellung mit einer Kurvenbahn, vorzugsweise einer Außenkontur einer Kurvenbahn, die auf der Radträgerseite angebracht ist, gebracht werden, Die Kurvenbahn bildet vorteilhafterweise das radträgerseitige Getriebeteil.

Die Aufnahme des Betriebs der Verdichteranordnung gemäß dem ersten sowie dem zweiten Aspekt, also Überführung der Getriebeteile in die Wirkstellung, bspw. die Bewegung des nabenseitigen Getriebeteils in die Wirkstellung, kann autonom, d.h. über eine beliebig gestaltete Regel- oder Steueranordnung im Fahrzeug erfolgen, die auf ein Abfallen des Reifendrucks hin den Betrieb der Verdichteranordnung aufnimmt, oder auf ein Steuersignal durch den Fahrzeugführer hin erfolgen. Mit anderen Worten die Verdichteranordnung pumpt bei leerlaufendem Reifen diesen selbstständig auf oder sie pumpt den Reifen auf ein Steuersignal des Fahrzeugführers hin auf. Ein Steuersignal des Fahrzeugführers ist bevorzugt über eine Bluetooth Verbindung an die Verdichteranordnung übermittelbar. Ein derartiges Steuersignal über die Bluetooth Verbindung kann bevorzugt über ein Handy durch den Fahrzeugführer an die Verdichteranordnung übermittelbar sein.

Bevorzugterweise ist auch bei der Verdichteranordnung gemäß dem zweiten Aspekt das Verdichterbauteil einstückig verbunden mit dem nabenseitigen Getriebeteil ausgebildet. Damit wird eine Bewegung des nabenseitigen Getriebeteils direkt auf das Verdichterbauteil übertragen und eine Bewegung des Verdichterbauteils direkt auf das nabenseitige Getriebeteil. Die zum Koppeln dienende Magnetkraft kann damit entweder auf das nabenseitige Getriebeteil oder auf das mit diesem einstückig verbundene Verdichterbauteil bzw.

einen Kolbenabschnitt des Verdichterbauteils wirken. Außerdem wird hierdurch ein weiteres Element zur Kraftübertragung zwischen nabenseitigem Getriebeteil und Verdichterbauteil überflüssig, wodurch die Verdichteranordnung gemäß dem zweiten Aspekt besonders robust wird.

Bevorzugt ist, wenn bei der Verdichteranordnung gemäß dem zweiten Aspekt in der Wandung des Kompressionsraums, vorzugsweise in der radial innenliegenden Wandung des Kompressionsraums, ein Elektromagnet angeordnet ist. Dieser Elektromagnet kann dabei derart ausgebildet sein, dass er bei Bestromung magnetisch ist, alternativ dazu kann der Elektromagnet jedoch auch bei Bestromung magnetisch sein. Ein bei Bestromung unmagnetischer Elektromagnet kann allgemein durch Verwendung eines Permanentmagneten als Kern realisiert sein. Die Magnetkraft des Permanentmagneten wird also bei Bestromung quasi aufgehoben. Wenn der Elektromagnet im unbestromten Zustand magnetisch ist, so kann er beispielsweise im radial innen liegenden Boden des Kompressionsraums angeordnet sein und das Verdichterbauteil bzw. einen kolbenartigen Abschnitt des Verdichterbauteils im ausgekuppelten Zustand per Magnetkraft halten. Das starr mit dem Verdichterbauteil verbundene nabenseitige Getriebeteil wird dann per Magnetkraft aus der Wirkstellung gehalten. Bei Bestromung des Elektromagneten hört die Magnetkraft des Permanentmagneten auf zu wirken. Da das nabenseitige Getriebeteil nicht mehr aus der Wirkstellung gehalten wird, wird es durch die Fliehkräfte, die beim Fahren des Fahrzeugs auftreten nach radial außen gedrängt und das nabenseitige Getriebeteil wird durch die Fliehkräfte in Eingriff mit einer Innenkontur einer Kurvenbahn gebracht, so dass es mit dieser Kurvenbahn, die das radträgerseitige Getriebeteil bildet, zusammenwirkt.

Bevorzugt ist bei der Verdichteranordnung gemäß dem zweiten Aspekt, wenn in dem Verdichterbauteil ein Permanentmagnet angeordnet ist. Hierdurch kann das Verdichterbauteil beispielsweise selbstständig an der, vorzugsweise radial innenliegenden, Wandung des Kompressionsraums magnetisch "kleben" bzw. haften. Diese magnetkraftbasierte Haftung des Verdichterbauteils am Boden des Kompressionsraus kann dann beispielsweise über einen in der Wandung befindlichen Elektromagnet gelöst werden. Hierzu ist der Elektromagnet derart gepolt, dass er den Permanentmagneten im Verdichterbauteil bei Bestromung abstößt. Das nabenseitige Getriebeteil koppelt dann mit dem radträgerseitigen Getriebeteil ein, beziehungsweise wird in Wirkstellung mit diesem bewegt. Diese Bewegung erfolgt bspw. wiederum über die Fliehkräfte beim Betrieb des Fahrzeugs. Es sind jedoch auch andere Kräfte denkbar die diese Bewegung verursachen, bspw. eine pneumatische Aktuierung.

Bevorzugt ist bei der Verdichteranordnung gemäß dem zweiten Aspekt, wenn in der radialen Wandung, vorzugsweise der radial innenliegenden Wandung, des Kompressionsraums ein Druckmitteleinlass, zur Zuführung eines Druckstoßes in den Kompressionsraum, angeordnet ist, der über ein schaltbares Ventil, vorzugsweise ein Magnetventil, mit einer Druckmittelquelle verbindbar ist. Über diesen Druckmitteleinlass kann Druckmittel aus der Druckmittelquelle in Form eines Druckstoßes eingelassen werden. Durch einen derartigen Druckstoß kann ebenfalls ein magnetisches Haften des Verdichterbauteils von der Wandung des Kompressionsraums gelöst werden, woraufhin dann das Verdichterbauteil getrieben durch Fliehkräfte derart bewegt wird, dass das nabenseitige Getriebeteil in die Wirkstellung mit dem radträgerseitigen Getriebeteil bewegt wird.

Der Druckmitteleinlass in der radial innen liegenden Wandung des Kompressionsraums bei der Verdichteranordnung gemäß dem zweiten Aspekt kann auch mit einem Permanentmagneten, der in der radial innen liegenden Wandung des Kompressionsraums angeordnet ist, kombiniert sein, wobei dann das Verdichterbauteil keinen Permanentmagneten umfassen muss, sondern lediglich ein magnetisches Material, welches mit dem Permanentmagneten, der in der Wandung des Kompressionsraums angeordnet ist, zusammenwirken kann.

Bevorzugt ist bei der Verdichteranordnung gemäß dem zweiten Aspekt, wenn in der radialen Wandung, vorzugsweise der radial innenliegenden Wandung, des Kompressionsraums ein Druckmittelauslass, der über einen Leitungsabschnitt, in dem ein Rückschlagventil angeordnet ist, mit der Reifenkavität verbindbar ist, wobei der Leitungsabschnitt mit einem Entlastungsventil verbunden ist, über das der Leitungsabschnitt entleerbar ist. Bevorzugterweise ist das Rückschlagventil am Druckmittelauslass dabei derart ausgeführt, dass im Förderhub des Verdichterbauteils immer ein Restdruck im komprimierten Teil des Kompressionsraums erhalten bleibt, wobei der Restdruck ein kontaktieren des Verdichterbauteils mit der Wandung, insbesondere der radial innen liegenden Wandung, des Kompressionsraums verhindert. Wenn das Verdichterbauteil die Wandung des Kompressionsraums nicht kontaktiert kann auch ein magnetisches Haften nicht eintreten. Um das nabenseitige Getriebeteil aus der Zusammenwirkung mit dem radträgerseitigen Getriebeteil zu bringen, kann der Leitungsabschnitt über das Entlastungsventil entleert werden. Das Rückschlagventil öffnet daraufhin und das residuale Druckmittel aus dem Kompressionsraum entweicht. Daraufhin kommt das Verdichterbauteil in Kontakt mit der radial innen liegenden Wandung des Kompressionsraums und kann magnetisch an diesem haften. Die Getriebeteile sind dann ausgekoppelt bzw. das nabenseitige Getriebeteil ist dann aus der Wirkstellung bewegt.

Bevorzugt ist bei der Verdichteranordnung gemäß dem zweiten Aspekt, wenn in einer umfänglichen Wandung des Kompressionsraums wenigstens ein Permanentmagnet, vorzugsweise eine Reihe von Permanentmagneten, angeordnet ist. Die Reihe von Permanentmagneten ist dabei vorzugweise mit gleichförmig angeordneter Polung in der Wandung des Kompressionsraums angeordnet. Vorzugsweise sind die Permanentmagneten in der Wandung des Kompressionsraums ringartig ausgebildet. Bevorzugterweise ist dabei ein weiter Permanentmagnet im Verdichterbauteil angeordnet. Befindet sich der Permanentmagnet des Verdichterbauteils in den ringartig ausgebildeten Permanentmagneten der Wandung des Kompressionsraums, so unterstützen diese die Bewegung des Verdichterbauteils im Kompressionsraum. Hierdurch kann die Verdichteranordnung auch bei sehr hohen Drehzahlen bzw. bei sehr hohen Fliehkräften sicher betrieben werden.

Bevorzugt ist bei der Verdichteranordnung gemäß dem zweiten Aspekt, wenn das Verdichterbauteil ausgebildet und angeordnet ist, um im Betrieb der Verdichteranordnung sowohl mittels einer radial einwärts als auch mittels einer radial auswärts gerichteten Bewegung Druckmittel zu fördern. Hierdurch fördert das Verdichterbauteil bzw. die Verdichteranordnung besonders effizient, da das Verdichterbauteil quasi als Doppelkolben arbeitet.

Bevorzugt ist bei der Verdichteranordnung gemäß dem zweiten Aspekt, wenn an dem Verdichterbauteil ein Flatterventil angeordnet ist, vorzugsweise zwei Flatterventile angeordnet sind, wobei eines der Flatterventile nach radial einwärts und das andere Flatterventil nach radial auswärts öffenbar ausgebildet ist. Hierdurch kann ein Umschalten zwischen Ansaugen und Fördern bzw. zwischen Saughub und Förderhub besonders effizient erfolgen. Die in unterschiedliche Richtungen öffnenden Flatterventile ermöglichen auf besonders einfache Art und Weise die im vorigen Absatz beschriebene Förderung bei Ein- und Auswärtsbewegung des Verdichterbauteils bzw. ermöglichen eine Funktion als Doppelkolben.

Bevorzugt ist bei der Verdichteranordnung gemäß dem zweiten Aspekt, wenn das radträgerseitige Getriebeteil eine Scheibennutkurve und/oder eine Scheibenwulstkurve, vorzugsweise mit einem Weichenabschnitt und mit einer Arbeitsbahn und einer Freilaufbahn, die über den Weichenabschnitt verbunden sind, umfasst. Eine Scheibennutkurve ist dabei eine Kurvenbahn, die in Form einer Nut ausgeführt ist. In diese Nut greift ein Eingriffselement des nabenseitigen Getriebeteils ein. Hierdurch wird eine Zwangsführung des nabenseitigen Getriebeteils erreicht. Entsprechend ist eine Scheibenwulstkurve eine Kurvenbahn in Form einer Wulst. Bei einer derartigen Scheibenwulstkurve greift das nabenseitige Getriebeteil von oben und unten bzw. von beiden Seiten die Wulst und ist damit ebenso zwangsgeführt. Eine Arbeitsbahn ist dabei ein Abschnitt der Kurvenbahn, in dem die Kurvenbahn derart ungleichförmig ist, dass das in Eingriff stehende nabenseitige Getriebeteil bewegt wird. Im Gegensatz zur Arbeitsbahn steht die Freilaufbahn. Mit einer Freilaufbahn ist ein Abschnitt der Kurvenbahn gemeint, in dem die Kurvenbahn derart gleichförmig ist, dass das nabenseitige Getriebeteil nicht bewegt wird, auch wenn es in Eingriff mit der Freilaufbahn steht. Um ein Aufnehmen bzw. Beenden des Betriebs der Verdichteranordnung zu ermöglichen verfügte die Kurvenbahn über den Weichenabschnitt. Durch einen geeigneten Steuerimpuls kann das nabenseitige Getriebeteil von der Freilaufbahn in die Arbeitsbahn gebracht werden bzw. von der Arbeitsbahn in die Freilaufbahn.

Bevorzugt ist bei der Verdichteranordnung gemäß dem zweiten Aspekt, wenn das nabenseitige Getriebeteil einen Stößelabtrieb umfasst. Dieser Stößelabtrieb ist erfindungsgemäß mit dem Verdichterbauteil starr bzw. einstückig verbunden.

Bevorzugt ist bei der Verdichteranordnung gemäß dem zweiten Aspekt, wenn der Stößelabtrieb über eine Innenkontur der Scheibenkurve antreibbar ist. Die Kontur der Scheibenkurve ist radial innen liegend. Die geführte Bewegung erfolgt nach radial innen. Damit wird sichergestellt, dass sich das nabenseitige Getriebeteil bzw. das Verdichterbauteil entgegen den Fliehkräften sicher nach radial innen bewegt.

Der Stößelabtrieb kann bei der Verdichteranordnung gemäß dem zweiten Aspekt aber auch über eine Außenkontur der Scheibenkurve antreibbar sein. Dann erfolgt die Zwangsführung der Bewegung nach radial außen.

Bevorzugt ist bei der Verdichteranordnung gemäß dem zweiten Aspekt, wenn die Verdichteranordnung mehrere Verdichterbauteile umfasst, die vorzugsweise in einer Umfangsrichtung gleichmäßig um die Rotationsachse verteilt angeordnet sind.

Bevorzugt ist bei der Verdichteranordnung gemäß dem ersten und dem zweiten Aspekt, wenn das nabenseitige Getriebeteil einen Rollenstößel umfasst, wodurch besonders reibungsarmer Kontakt mit dem radträgerseitigen Getriebeteil gewährleistet wird.

Bevorzugt ist bei der Verdichteranordnung gemäß dem ersten und dem zweiten Aspekt, wenn der Rollenstößel selbstschmierend ist, vorzugsweise mit einem Schmiermittelreservoir in einem Schaft des Rollenstößels. Dadurch wird die Reibung minimiert. Bevorzugt ist dabei, wenn Schmiermittel in dem Schmiermittelreservoir über eine Vorspanneinrichtung in Richtung einer Rolle des Rollenstößels vorgespannt ist. Bevorzugt ist auch, wenn das Schmiermittelreservoir rollenseitig eine Auslaufsicherung umfasst. Eine stets gewährleistete Schmierung erhöht die Lebensdauer der Verdichteranordnung.

Bevorzugt ist bei der Verdichteranordnung gemäß dem ersten und dem zweiten Aspekt auch, wenn die Verdichteranordnung eine Einrichtung zur Messung und/oder Anzeige des Drucks, der Temperatur und/oder der Feuchtigkeit des Druckmittels in der Reifenkavität umfasst, vorzugsweise die über die Druckmittelleitung mit der Reifenkavität verbindbar ist.

Bevorzugt ist bei der Verdichteranordnung gemäß dem ersten und dem zweiten Aspekt auch, wenn die Verdichteranordnung druckmitteleinlassseitig mit einem Filter verbunden ist.

Bevorzugt ist bei der Verdichteranordnung gemäß dem ersten und dem zweiten Aspekt auch, wenn die Verdichteranordnung ausgebildet ist, um Druckmittel aus der Reifenkavität oder über Förderung durch die Verdichteranordnung zum Reinigen des Filters zu verwenden.

Weitere Merkmale, Anwendungsmöglichkeiten und Vorteile der Erfindung ergeben sich aus der nachfolgenden Beschreibung von Ausführungsbeispielen der Erfindung, die anhand der Zeichnung erläutert werden, wobei die Merkmale sowohl in Alleinstellung als auch in unterschiedlichen Kombinationen für die Erfindung wesentlich sein können, ohne dass hierauf nochmals explizit hingewiesen wird. Es zeigen:
Figur 1 eine schematische Darstellung der Anordnung einer erfindungsgemäßen Verdichteranordnung;
Figur 2 bis 4 eine erste Ausführungsform der erfindungsgemäßen Verdichteranordnung in verschiedene Ansichten;
Figur 5 eine weitere Ausführungsform der erfindungsgemäßen Verdichteranordnung in einer Ansicht entsprechend Figur 4;
Figur 6 eine Ausführungsform eines radträgerseitigen Getriebeteils;
Figur 7 eine weitere Ausführungsform eines radträgerseitigen Getriebeteils;
Figur 8 eine weitere Ausführungsform der erfindungsgemäßen Verdichteranordnung mit einem radträgerseitigen Getriebeteil entsprechend Figur 8;
Figur 9 einen Kompressionsraum mit Verdichterbauteil einer Ausführungsform im Detail;
Figur 10 einen Kompressionsraum mit Verdichterbauteil einer weiteren Ausführungsform im Detail;
Figur 11 einen Kompressionsraum mit Verdichterbauteil einer weiteren Ausführungsform im Detail;
Figur 12 einen Kompressionsraum mit Verdichterbauteil einer weiteren Ausführungsform im Detail;
Figur 13 eine weitere Ausführungsform und einzelne Bereiche im Detail;
Figur 14 eine weitere Ausführungsform mit sich axial bewegendem Verdichterbauteil;
Figur 15 eine weitere Ausführungsform mit sich axial bewegendem Verdichterbauteil, ähnlich Figur 14;
Figur 16 eine Draufsicht auf die dem radträgerseitigen Getriebeteil abgewandte Seite des Verdichterbauteils der Verdichteranordnung aus Figur 14;
Figur 17 eine weitere Ausführungsform einer erfindungsgemäßen Verdichteranordnung;
Figur 18 eine weitere Ausführungsform einer erfindungsgemäßen Verdichteranordnung;
Figur 19 einen Teil einer schaltbaren Magnetanordnung; und
Figur 20 eine schaltbare Magnetanordnung in verschiedenen Schaltstellungen.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

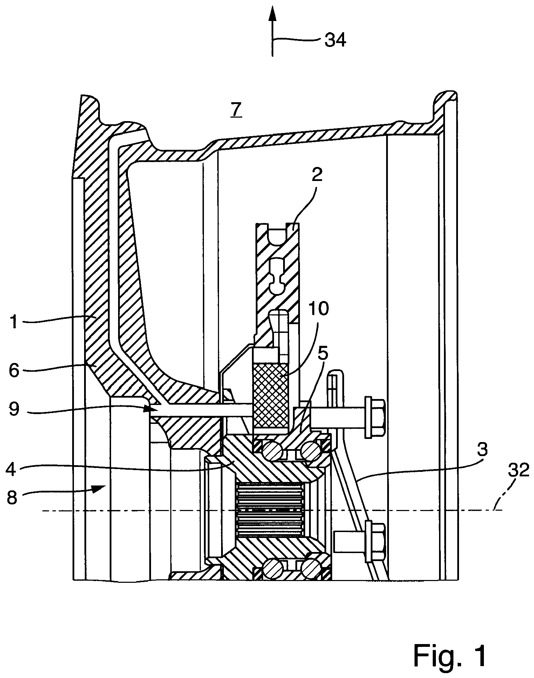

In Figur 1 ist die Einbaulage einer erfindungsgemäßen Verdichteranordnung 10 schematisch dargestellt. Die Verdichteranordnung 10 ist in Figur 1 nur schematisch durch eine kreuzschraffierte Fläche dargestellt.

Eine Felge trägt das Bezugszeichen 1. Eine Bremsscheibe das Bezugszeichen 2, ein Radträger das Bezugszeichen 3, eine Radnabe das Bezugszeichen 4 und ein Radlager trägt das Bezugszeichen 5.

Von der Verdichteranordnung 10 erstreckt sich eine Druckmittelleitung 6 bis zu einer Reifenkavität 7. Der Reifen selbst ist in Figur 1 nicht dargestellt.

Im Bereich einer Radnabenaufnahme 8 weist die Felge einen schematisch dargestellten Anschluss 9 zum Zuführen eines Abdichtmittels auf. Der Anschluss 9 ist dabei optional.

In der in Figur 1 gezeigten Ausführungsform erstreckt sich die Druckmittelleitung 6 durch das Material der Felge 1. Forteilhafterweise ist ein Abschnitt der Druckmittelleitung 6 durch eine holgebohrte Bremsscheibenbefestigungsschraube der Bremsscheibe 2 realisiert. Eine Rotationsachse trägt das Bezugszeichen 32. Eine radiale Richtung das Bezugszeichen 34. Um die Rotationsachse 32 dreht sich beim Betrieb des Fahrzeugs die Nabenseite und damit die nabenseitigen Komponenten gegenüber der Radträgerseite, also den radträgerseitigen Komponenten, wie beispielsweise dem Radträger 3 oder auch der Fahrgastzelle des Fahrzeugs.

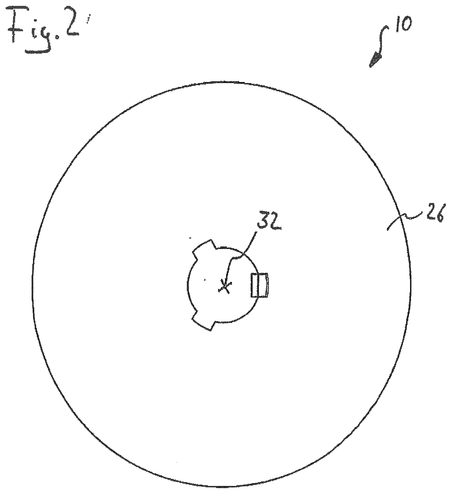

In den Figuren 2 bis 4 ist eine erste Ausführungsform einer erfindungsgemäßen Verdichteranordnung 10 im Detail gezeigt. Die Verdichteranordnung 10 umfasst ein erstes Gehäuseteil 12 sowie ein zweites Gehäuseteil 14.

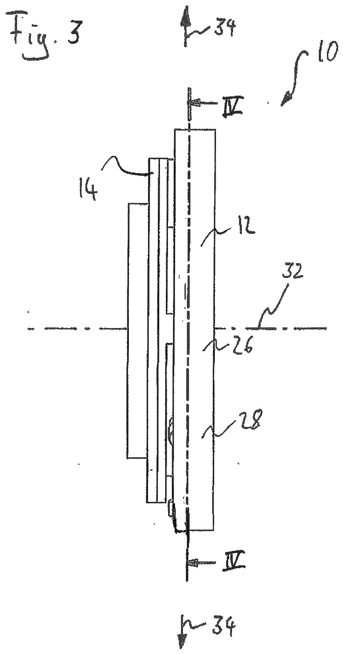

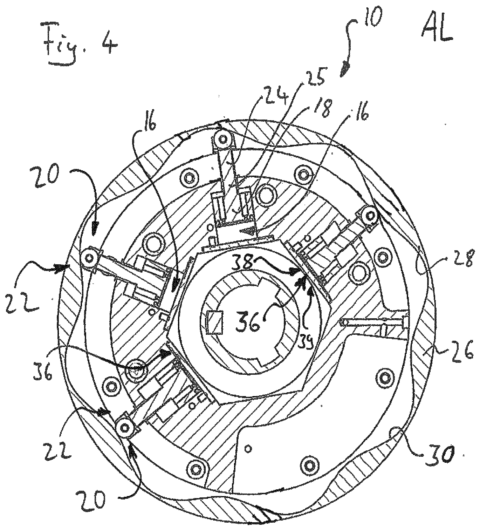

In Figur 4 ist die Verdichteranordnung 10 aus Figur 2 und 3 entlang der Linie IV-IV geschnitten dargestellt. Die Verdichteranordnung 10 umfasst vorliegend insgesamt vier nabenseitige Kompressionsräume 16, von denen lediglich zwei ein Bezugszeichen tragen.

Jedem der Kompressionsräume 16 ist ein nabenseitiges Verdichterbauteil 18 zugeordnet. Die Verdichteranordnung 10 umfasst mehrere Getriebe 20, wobei jedem der Kompressionsräume 16 ein Getriebe 20 zugeordnet ist. Die Getriebe 20 sind vorliegend jeweils als Kurvengetriebe 22 ausgeführt.

Die Getriebe 20 weisen jeweils ein nabenseitiges Getriebeteil 24 auf. Die nabenseitigen Getriebeteile 24 sind jeweils durch Stößelabtriebe 25 gebildet. Die Verdichterbauteile 18 sind dabei einstückig mit den Stößelabtrieben 25 bzw. nabenseitigen Getriebeteilen 24 ausgebildet. Die nabenseitigen Getriebeteile 24 der Getriebe 20 können jeweils mit einem radträgerseitigen Getriebeteil 26 der Verdichteranordnung 10 zusammenwirken.

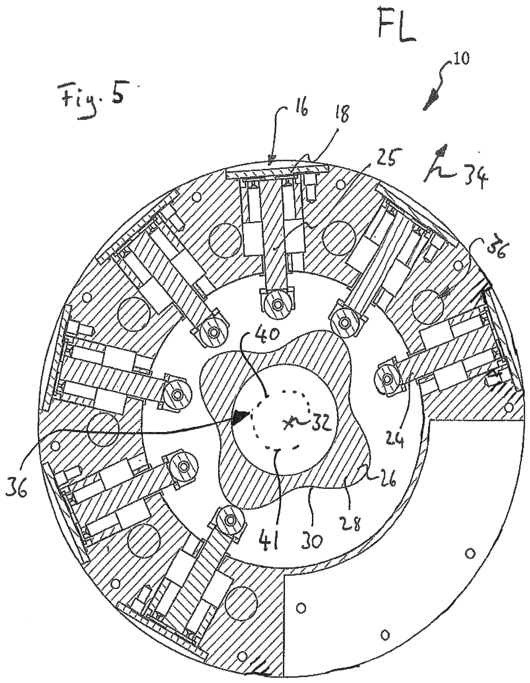

Die Verdichteranordnung 10 bzw. deren Getriebe 20 weist dabei lediglich ein einziges radträgerseitiges Getriebeteil 26 auf, das mit jedem der nabenseitigen Getriebeteile 24 zusammenwirken kann. Das radträgerseitige Getriebeteil 26 ist als Scheibenkurve 28 mit einer Kurvenkontur 30 ausgebildet, wobei diese bei der Ausführungsform der Figuren 2-4 innenliegend ist, also eine Innenkontur darstellt. Im Gegensatz hierzu ist die Kurvenkontur 30 bei der Ausführungsform der Figur 5 außenliegend ausgebildet, die Kurvenkontur 30 der Figur 5 stellt also eine Außenkontur dar.

In Figur 4 ist die Verdichteranordnung 10 in einer Arbeitsbetriebslage AL gezeigt. In der Arbeitsbetriebslage AL wirken die nabenseitigen Getriebeteile 24 mit dem radträgerseitigen Getriebeteil 26 zusammen, befinden sich also in einer Wirkstellung. Die Verdichteranordnung 10 ist im Betrieb. Die nabenseitigen Getriebeteile 24 stehen mit dem radträgerseitigen Getriebeteil 26 vorliegend in direktem mechanischem Kontakt.

Bei fahrendem Fahrzeug steht die Scheibenkurve 28 gegenüber dem Fahrzeug still. Die nabenseitigen Komponenten, beispielsweise die nabenseitigen Getriebeteile 24, drehen sich um eine Rotationsachse 32 bzw. drehen sich bezüglich des Fahrzeugs. Auf die nabenseitigen Getriebeteile 24 und die Verdichterbauteile 18 wirken je nach Fahrgeschwindigkeit hohe Fliehkräfte. Die Fliehkräfte wirken in einer radialen Richtung 34 nach außen. Diese Fliehkräfte drängen die nabenseitigen Getriebeteile 24 in Kontakt mit der Scheibenkurve 28 bzw. dem durch dieses gebildete radträgerseitigen Getriebeteil 26 (Figur 4).

Bei der Verdichteranordnung 10 aus Figur 4 sind über Kupplungseinrichtungen 36, in Form eines jeweiligen Elektromagneten 38, der in der radial innenliegenden Wandung der jeweiligen Kompressionsräume 16 angeordnet ist, die nabenseitigen Getriebeteile 24 entgegen der Fliehkraft über Magnetkräfte von dem radträgerseitigen Getriebeteil 26 wegbewegbar. Die Elektromagneten 38 bilden damit eine Entkoppeleinrichtung 39. Die nabenseitigen Getriebeteile 24 der Verdichteranordnung 10 der Figur 4 können durch Bestromung der Elektromagneten 38 aus der Wirkstellung mit dem radträgerseitigen Getriebeteil 26 bewegt werden, die Verdichteranordnung 10 ist dann nicht mehr in der Arbeitsbetriebslage AL. Die bestromten Elektromagneten 38 wirken über Magnetkräfte direkt auf die nabenseitigen Getriebeteile 24 bzw. auf die einstückig mit diesen ausgeführten Verdichterbauteile 18. Solange die Elektromagneten 38 bestromt werden, halten die Elektromagneten 38 die nabenseitigen Getriebeteile 24 aus der Wirkstellung mit dem radträgerseitigen Getriebeteil 26. Es kann auch ein entsprechend starker Permanentmagnet vorgesehen sein, der durch Bestromung des Elektromagneten 38 quasi deaktiviert wird. In diesem Fall muss der Elektromagnet 38 lediglich zum Aktivieren der Verdichteranordnung 10 bestromt werden.

In Figur 5 ist eine weitere Ausführungsform der Verdichteranordnung 10, wie oben beschrieben mit einem radträgerseitigen Getriebeteil 26, welches als Scheibenkurve 28 mit einer Kurvenkontur 30 als Außenkontur ausgeführt ist, gezeigt.

In Figur 5 ist die Verdichteranordnung 10 in einer Freilaufbetriebslage FL gezeigt. In dieser Freilaufbetriebslage FL wirken die nabenseitigen Getriebeteile 24 nicht mit dem radträgerseitigen Getriebeteil 26 zusammen. Die Verdichteranordnung 10 ist nicht in Betrieb.

Über eine Kupplungseinrichtung 36, in Form eines radträgerseitigen Elektromagneten 40, sind die nabenseitigen Getriebeteile 24 entgegen der Fliehkraft über Magnetkräfte auf das radträgerseitige Getriebeteil 26 zubewegbar. Der Elektromagnet 40 stellt eine Einkoppeleinrichtung 41 dar. Die Verdichteranordnung 10 der Figur 5 befindet sich dann in der Arbeitsbetriebslage.

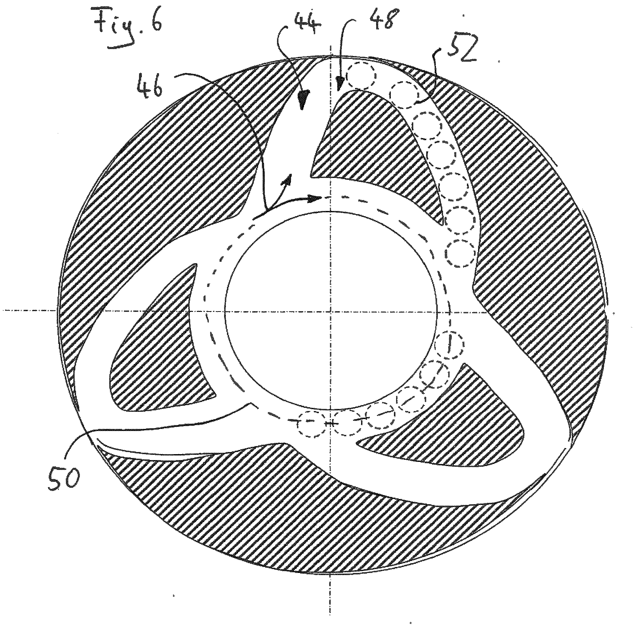

In Figur 6 ist ein alternatives radträgerseitiges Getriebeteil 26 gezeigt, das eine Scheibennutkurve 44 umfasst. Die Scheibennutkurve 44 umfasst einen Weichenabschnitt 46, der durch einen Doppelpfeil gekennzeichnet ist. Der Weichenabschnitt 46 steht in Verbindung mit einer Arbeitsbahn 48 und einer Freilaufbahn 50, die durch eine unterbrochene Linie dargestellt ist. Ein Eingriffselement 52, das mit dem nabenseitigen Getriebeteil 24 verbunden ist und beispielsweise als Rolle ausgeführt sein kann, ist symbolisch dargestellt. Bewegt sich das Eingriffselement 52 auf der Freilaufbahn 50 so erfolgt keine Bewegung des damit verbundenen nabenseitigen Getriebeteils 24 in radialer Richtung 34. Steht das Eingriffselement 52 jedoch im Eingriff mit der Arbeitsbahn 48, so bewegt sich das Eingriffselement 52 zwangsgeführt in der Arbeitsbahn und damit bewegt sich auch das nabenseitige Getriebeteil 24 zwangsgeführt. Über eine magnetbasierte Entkoppeleinrichtung 39 und eine magnetbasierte Einkoppeleinrichtung 41 kann das nabenseitige Getriebeteil 24 bzw. dessen Eingriffselement 52 von der Arbeitsbahn 48 in die Freilaufbahn 50 geschaltet werden. In der Arbeitsbahn 48 steht das nabenseitige Getriebeteil 24 in Wirkstellung mit dem radträgerseitigen Getriebeteil 26. In der Freilaufbahn 50 steht das nabenseitige Getriebeteil 24 nicht in Wirkstellung mit dem radträgerseitigen Getriebeteil 26.

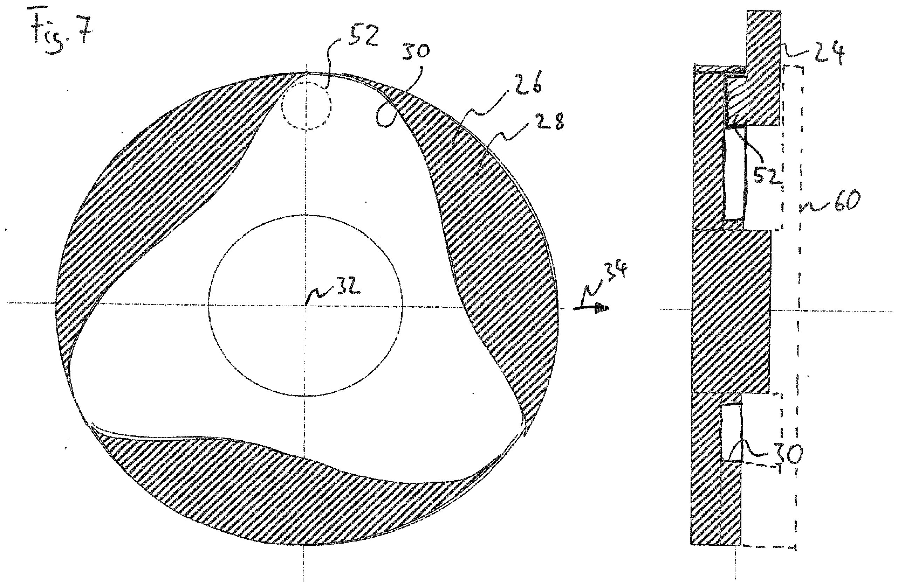

In Figur 7 ist das Prinzip eines seitlichen Eingriffs des Eingriffselements 52 in die Kurvenkontur 30 illustriert. Links ist die Kurvenkontur 30 schematisch beim Blick entlang der Rotationsachse 32 gezeigt und rechts entsprechend schematisch beim Blick entgegen der radialen Richtung 34 in einer Schnittdarstellung. Die Kurvenkontur 30 kann auch beim Blick entlang der Rotationsachse 32 gesehen vor und hinter dem Eingriffselement 52 geschlossen ausgeführt sein, was durch die gestrichelte Linie mit dem Bezugszeichen 60 angedeutet ist.

Eine beidseitige Zwangsführung des Eingriffselement 52, wie in der Arbeitsbahn 48 der Figur 6 gegeben, eignet sich besonders gut für eine Kombination mit einem Verdichterbauteil 18, das nach Art eines Doppelkolbens ausgeführt ist.

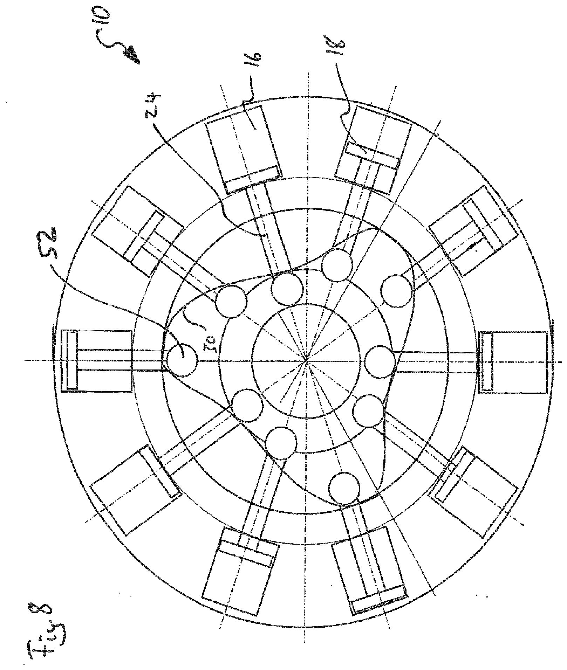

In Figur 8 ist eine Verdichteranordnung 10 nach dem Prinzip des seitlichen Eingriffs aus Figur 7 gezeigt.

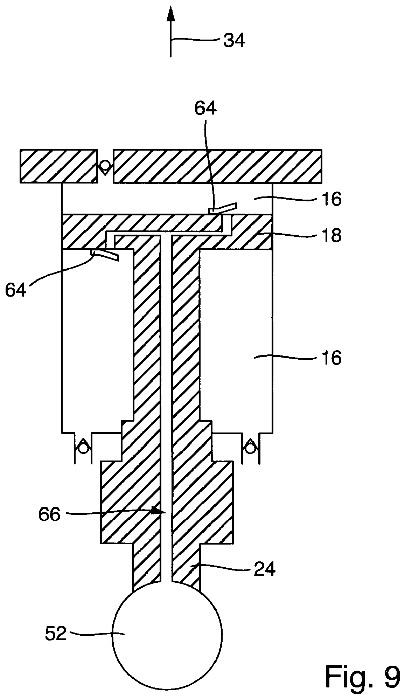

Ein Verdichterbauteil 18, das nach Art eines Doppelkolbens ausgeführt ist, ist schematisch in Figur 9 gezeigt. An dem Verdichterbauteil 18 sind Flatterventile 64 gezeigt die jeweils nach radial innen und nach radial außen öffnen können. Beim jeweiligen Förderhub schließen die Flatterventile 64. Die Luftansaugung im Saughub kann über einen Kanal 66 im dem nabenseitigen Getriebeteil 24 erfolgen. Alternativ können auch Flatterventile 64 an der Wandung des Kompressionsraums 16 angeordnet sein. In der Darstellung von Figur 9 wären diese dann jeweils oben und unten angeordnet und würden zum Kompressionsraum 16 in öffnen.

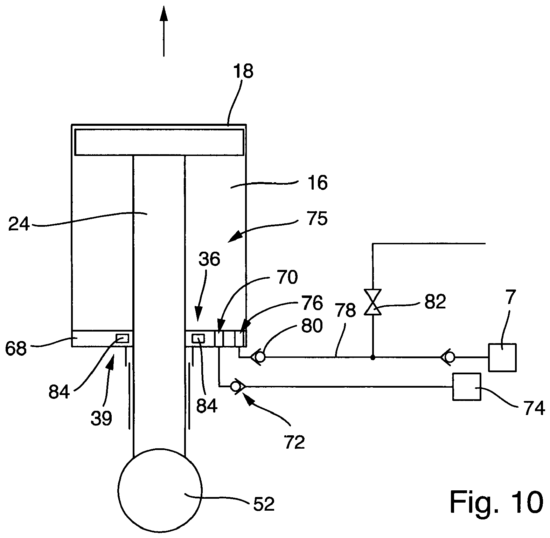

In Figur 10 ist, ähnlich der Darstellung von Figur 9, ein einzelner Kompressionsraum 16 mit einem Verdichterbauteil 18 gezeigt, wobei in der radialen Wandung 68, genauer der radial innenliegenden Wandung 68, des Kompressionsraums 16 ein Druckmitteleinlass 70, zur Zuführung eines Druckstoßes in den Kompressionsraum 16, angeordnet ist, der über ein schaltbares Ventil 72, vorzugsweise ein Magnetventil, mit einer Druckmittelquelle 74 verbindbar ist. Bei dieser Ausführungsform bildet der Kompressionsraum 16 gleichzeitig einen Druckraum 75.

Die Verdichteranordnung 10 aus Figur 10 ist im sonstigen Aufbau ähnlich der Verdichteranordnung 10 aus Figur 8, also mit seitlichem Eingriff ausgebildet.

In der radialen Wandung 68 des Kompressionsraums 16 ist auch ein Druckmittelauslass 76 angeordnet, der über einen Leitungsabschnitt 78, in dem ein Rückschlagventil 80 angeordnet ist, mit der Reifenkavität 7 verbindbar ist, wobei der Leitungsabschnitt 78 mit einem Entlastungsventil 82 verbunden ist, über das er entleerbar bzw. druckentlastbar ist.

Im Betrieb der Verdichteranordnung 10, mit einer Konfiguration von Kompressionsraum 16 und Verdichterbauteil 18 wie in Figur 10 gezeigt (der Gesamtaufbau der Verdichteranordnung entspricht Figur 8), kann das Verdichterbauteil 18 über Magnetkräfte mittels eines Permanentmagneten 84, der in der Wandung des Kompressionsraums 16 angeordnet ist, an der Wandung des Kompressionsraums 16 gehalten werden. Um das Verdichterbauteil 18 von dem Permanentmagneten 84 zu lösen, wird Druckmittel aus der Druckmittelquelle 74 über das Ventil 72 und den Druckmitteleinlass 70 in den Kompressionsraum 16 in Form eines Druckstoßes eingebracht. Hierdurch wird das Verdichterbauteil 18 von dem Permanentmagneten 84 gelöst und die Fliehkräfte ziehen es nach radial außen, wobei das nabenseitige Getriebeteil 24 mit seinem Eingriffselement 52 in Wirkstellung mit dem radträgerseitigen Getriebeteil 26 (nicht dargestellt, siehe aber Kurvenbahn in Figur 7) gebracht wird.

Beim Förderhub bewegt sich das Verdichterbauteil 18 in der Darstellung von Figur 10 abwärts, dabei strömt Druckmittel durch den Druckmittelauslass 76 zur Reifenkavität 7. Ein gewisser residualer Druck verbleibt jedoch im Kompressionsraum 16. Dieser residuale Druck verhindert, dass das Verdichterbauteil 18 in haftenden Kontakt mit dem Permanentmagneten 84 kommt. Der Kompressionsraum 16 wirkt als pneumatische Feder und stellt einen Druckraum 25 dar. Soll die Verdichteranordnung 10 ihren Betrieb einstellen, so wird der Leitungsabschnitt 78 über das Entlastungsventil 82 entleert. Der residuale Druck im Druckraum 25 bzw. Kompressionsraum 16 wird daraufhin über das Rückschlagventil 80 in den Leitungsabschnitt 78 entlassen.

Alternativ oder zusätzlich zu der Kopplung über den eben beschriebenen Druckstoß kann auch neben dem Permanentmagneten 84 ein Elektromagnet 38 in der Wandung des Kompressionsraums angeordnet sein, wobei der Elektromagnet 38 derart ausgebildet ist, dass er bei Bestromung die Magnetkräfte des Permanentmagneten 84 aufhebt. Die eben beschriebene Kombination aus Permanentmagnet 84 und Elektromagnet 38 stellt dabei eine kombinierte Entkoppeleinrichtung 39 dar. Über die Fliehkräfte wird dann das nabenseitige Getriebeteil 24 in Wirkstellung mit dem radträgerseitigen Getriebeteil 26 gebracht. Dies kann jedoch auch über stark genug ausgebildete Magnetkräfte geschehen.

Es kann auch ein Permanentmagnet im Verdichterbauteil 18 angeordnet sein. Ein derartiger Permanentmagnet kann die eben in Bezug auf Figur 10 beschriebene Interaktion verstärken. Der Permanentmagnet im Verdichterbauteil 18 kann auch derart ausgebildet und angeordnet sein, dass er mit der Wandung des Kompressionsraums 16 zusammenwirkt und bei Bestromung eines in dieser Wandung angeordneten Elektromagneten 38 von dieser abgestoßen wird. Es kann auch ein weiterer Permanentmagnet in der Wandung des Kompressionsraums 16 angeordnet sein, der ständig in attraktiver Weise mit dem Permanentmagneten im Verdichterbauteil 18 zusammenwirkt, wobei diese anziehende Wirkung jedoch durch Bestromung eines Elektromagneten in der Wandung des Kompressionsraums 16 aufgehoben werden kann.

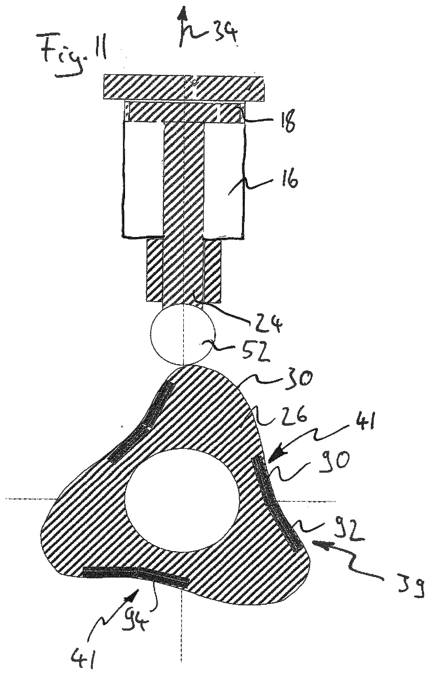

Permanentmagneten 90 und/oder Elektromagneten 92 können auch in dem radträgerseitigen Getriebeteil 26 angeordnet sein und das nabenseitige Getriebeteil 24 anziehen, sie stellen dann eine Einkoppeleinrichtung 41 dar, bzw. bei entsprechender Polung und Bestromung und Anordnung abstoßen, sie stellen dann eine Entkoppeleinrichtung 39 dar. Eine derartige Ausführung ist in Figur 11 illustriert.

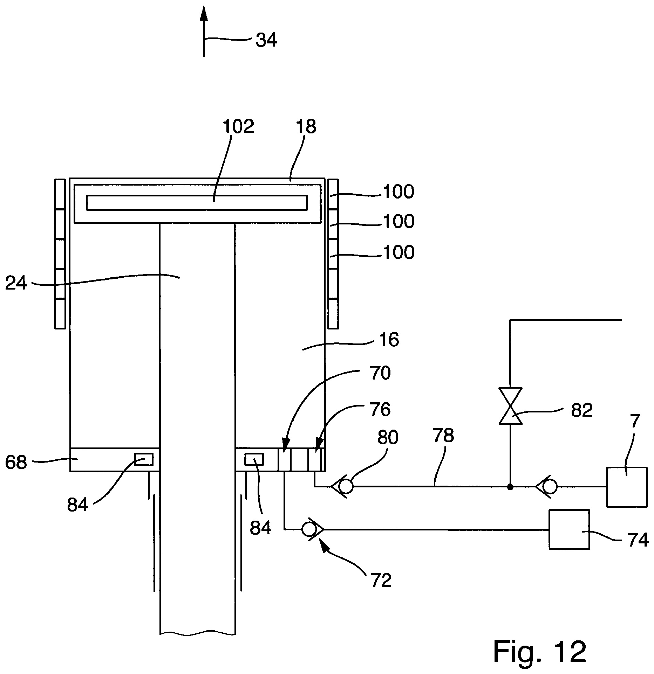

Beispielsweise können die Permanent Magneten 90 dafür sorgen, dass das nabenseitige Getriebeteil 24 stets in Kontakt mit dem radträgerseitigen Getriebeteil 26 verbleibt wenn es einmal in Kontakt und damit in der Wirkstellung ist (Einkoppeleinrichtung 41). Über eine entsprechend gepolte Bestromung des Elektromagneten 92 kann die Magnetkraft der Permanentmagneten 90 geschwächt oder aufgehoben werden, so dass das nabenseitige Getriebeteil 24 aus der Wirkstellung gebracht wird (Entkoppeleinrichtung 39). Es können auch weitere Elektromagneten 94 angeordnet sein, die bei Bestromung zu einer Verstärkung der Magnetkraft der Permanentmagneten 90 führen und damit die nabenseitigen Getriebeteile 24 in Wirkstellung mit dem radträgerseitigen Getriebeteil 6 20 bringen können(Einkoppeleinrichtung 41). Figur 12 zeigt einen Bereich um einen Kompressionsraum 16, ähnlich der Variante, die in Figur 10 gezeigt ist. Bei der in Figur 12 gezeigten Variante sind jedoch mehrere ringartige Permanentmagneten 100 um den Kompressionsraum 16 herum angeordnet. Diese Permanentmagneten 100 wirken mit einem Permanentmagnet 102 in dem Verdichterbauteil 18 zusammen. Die Anordnung und Polung der Permanentmagneten 100 kann dabei derart gewählt werden, dass die Bewegung des Verdichterbauteils 18 in radialer Richtung 34 entweder nach radial innen oder nach radial außen unterstützt wird.

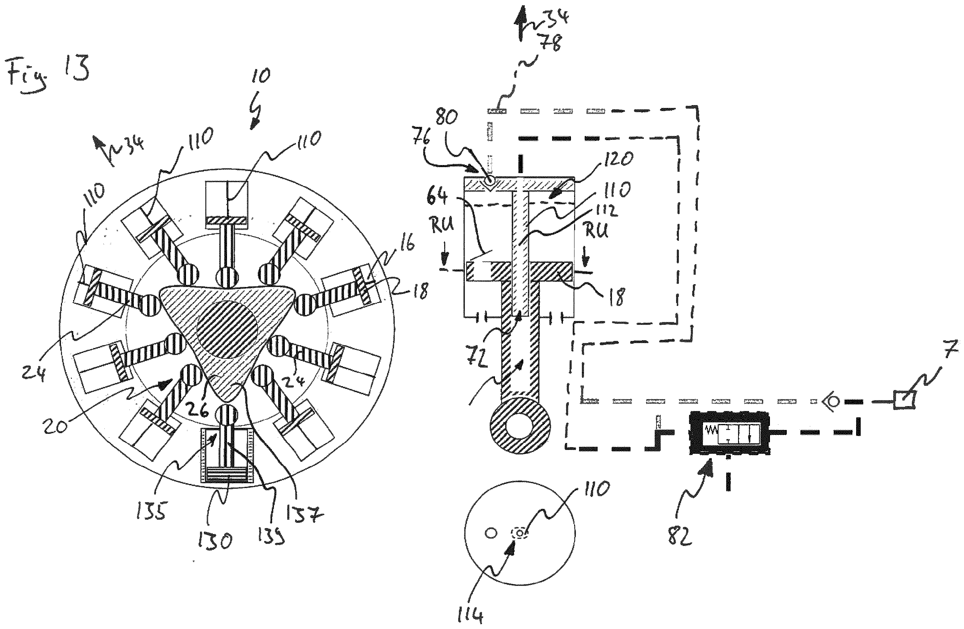

In Figur 13 links ist eine weitere Ausführungsform (ähnlich der von Figur 5 im Hinblick auf die Getriebeteile 24, 26) einer erfindungsgemäßen Verdichteranordnung 10 schematisch gezeigt. Rechts oben ist ein Kompressionsraum 16 mit Verdichterbauteil 18 und nabenseitigem Getriebeteil 24 im Detail dargestellt. Rechts unten ist das Verdichterbauteil geschnitten entlang der Linie RU-RU dargestellt.

Diese Verdichteranordnung 10 umfasst bei den Verdichterbauteilen 18 je ein stabartiges Führungselement 110, das sich in das Verdichterbauteil 18 erstreckt.

Ein derartiges Verdichterbauteil 18 ist rechts dargestellt. Der Druckmitteleinlass 72 ist dabei an dem stabartigen Führungselement 110 angeordnet. Der Druckmitteleinlass 72 mündet in den Druckraum 75, der vorliegend getrennt von dem Kompressionsraum 16 ausgeführt ist. Es besteht also keine pneumatische Verbindung zwischen dem Druckraum 75 und dem Kompressionsraum 16.

Wird der Druckraum 75 mit Druckmittel beaufschlagt, so bewegt sich das Verdichterbauteil 16 nach unten (in der rechten Darstellung von Figur 13) bzw. nach radial innen (in der linken Darstellung von Figur 13). Hierdurch kann das nabenseitige Getriebeteil 24 in Kontakt mit dem radträgerseitigen Getriebeteil Teil 26 gebracht werden. Wird der Druckraum 75 nicht über das Entlastungsventil 82 druckentlastet (bleibt also mit unter Druck stehendem Druckmittel gefüllt), so wirkt der Druckraum 75 als pneumatische Feder. Beim Förderhub wird das Druckmittel im Druckraum 75 komprimiert. Wenn das Verdichterbauteil 18 seinen oberen Totpunkt erreicht, wir durch den Druck im Druckraum 25 der Saughub eingeleitet bzw. der Druck im Druckraum 25 sorgt dafür, dass das nabenseitige Getriebeteil 24 stets in Kontakt mit dem radträgerseitigen Getriebeteil 26 verbleibt. Soll der Betrieb der Verdichteranordnung 10 eingestellt werden, so kann der Druckraum 25 über das Entlastungsventil 82 druckentlastet werden.

In dem stabartigen Führungselement 110 verläuft ein Zuleitungsabschnitt 112, der in den Druckmitteleinlass 72 mündet. Das Führungselement 110 bildet in Figur 13 einen Teil der Begrenzung des Druckraums 75. In Figur 13 sind der Leitungsabschnitt 78 und der Druckraum 75 über ein gemeinsames Steuerventil druckentlastbar bzw. entleerbar.

Wie in Figur 13 rechts unten dargestellt, bildet das Führungselement 110 eine Verdrehsicherung 114 für das Verdichterbauteil 18, wobei das Führungselement 110 einen unrunden, vorliegend quasi ovalen Querschnitt aufweist.

Ein Totraumvolumen trägt in Figur 13 (rechts oben) das Bezugszeichen 120 und ist symbolisch durch eine unterbrochene Linie dargestellt.

Die Verdichteranordnung 10 in Figur 13 (links) umfasst einen Translator 130 einer Generatoranordnung 140. Die Generatoranordnung 140 erzeugt durch oszillierende translatorische Bewegung des Translators 140 elektrische Energie. Die Verdichteranordnung 10 umfasst dabei ein Generatorgetriebe 135, das eingerichtet ist, um eine Rotationsbewegung zwischen Radträgerseite und Radnabenseite in eine oszillierende translatorische Bewegung des Translators 130 umzuwandeln, wenn ein radträgerseitiges Generatorgetriebeteil 137 (vorliegend identisch mit dem radträgerseitigen Getriebeteil 26) mit einem nabenseitigen Generatorgetriebeteil 139 in einer Wirkstellung steht. Das Generatorgetriebe 135 ist vorliegend unabhängig von dem Getriebe 20 betätigbar. Das Getriebe 20 und das Generatorgetriebe 135 sind vorliegend quasi identisch aufgebaut. Der Translator 130 kann auch eine Doppelfunktion als Verdichterbauteil 18 erfüllen.

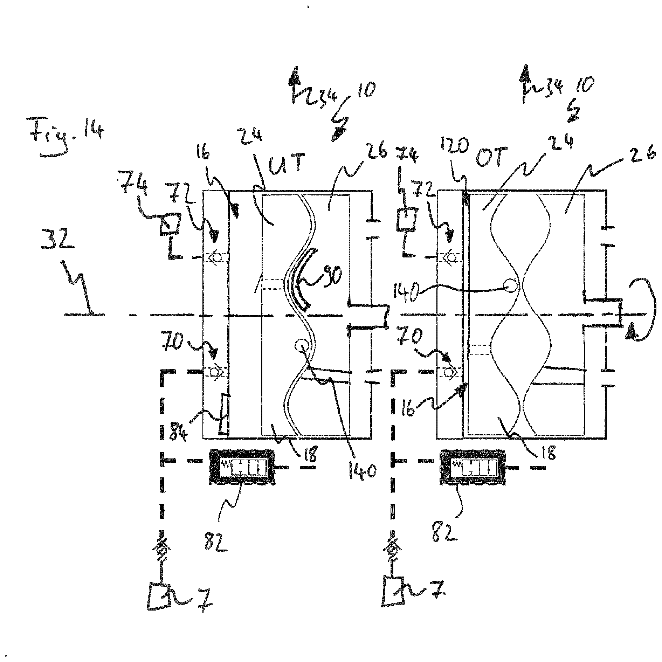

Bei der in Figur 14 gezeigten Ausführungsform bewegt sich das Verdichterbauteil 18 in axialer Richtung, also in Richtung der Rotationsachse 32. Die Figur 14 zeigt dabei einen Schnitt durch das Gehäuse bzw. die Begrenzung des Kompressionsraums 16 entlang einer sich in radialer Richtung 34 erstreckenden Ebene.

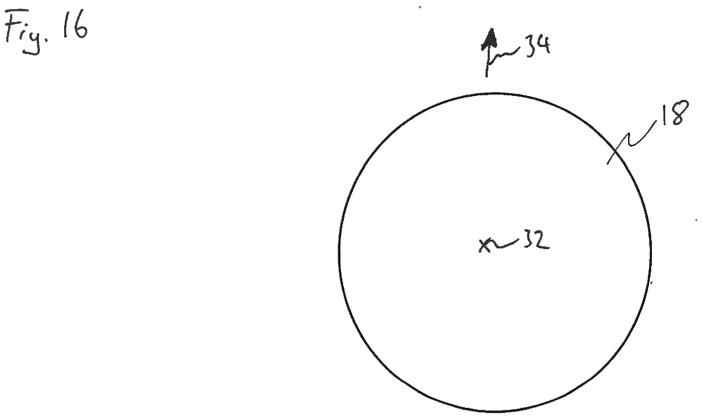

Nabenseitiges Getriebeteil 24 bzw. Verdichterbauteil 18 und radträgerseitiges Getriebeteil 26 haben beim Blick entlang der Rotationsachse 32 gesehen einen kreisförmigen Querschnitt (siehe Figur 16).

Figur 14 zeigt eine Verdichteranordnung 10 in zwei Betriebszuständen. Links ist das plattenartigen ausgebildete Verdichterbauteil 18, das gleichzeitig das nabenseitige Getriebeteil 24 bildet, in einem unteren Totpunkt UT gezeigt und rechts im oberen Totpunkt OT. Das radträgerseitige Getriebeteil 26 rotiert gegenüber dem nabenseitigen Getriebeteil 24. Ein Mitnehmer 140 verhindert, dass sich das nabenseitige Getriebeteil 24 mit dem radträgerseitigen Getriebeteil 6 20 mitdreht. Der Mitnehmer 140 ist mit dem Gehäuse (nur schematisch dargestellt) der Verdichteranordnung 10 verbunden.

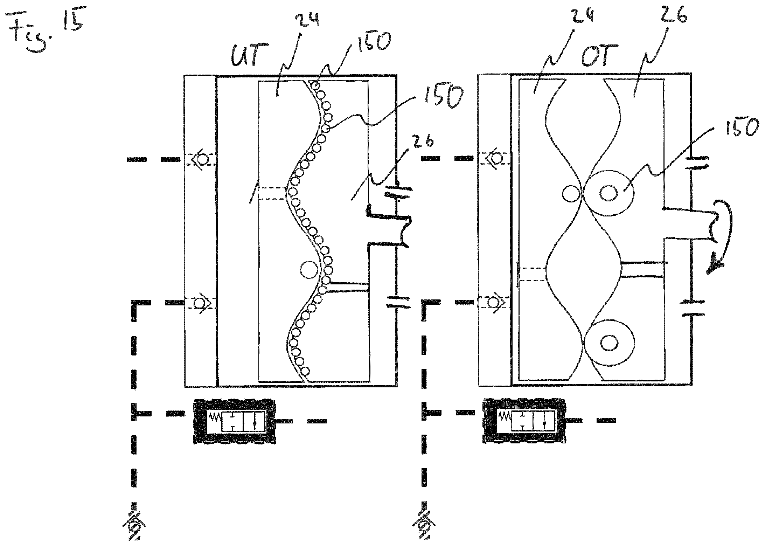

Figur 15 zeigt alternative Ausführungsformen der Verdichteranordnung 10 aus Figur 14

Im Kontaktbereich zwischen dem nabenseitigen Getriebeteil 24 und dem radträgerseitigen Getriebeteil 26 sind in den in Figur 15 gezeigten Ausführungsformen Rollen 150 angeordnet. Die Rollen 150 können dabei am nabenseitigen Getriebeteil 24 oder am radträgerseitigen Getriebeteil 26, wie in Figur 15 dargestellt, angeordnet sein.

Figur 16 zeigt eine Draufsicht auf die dem radträgerseitigen Getriebeteil 26 abgewandte Seite des Verdichterbauteils 18 der Verdichteranordnung 10 aus Figur 14 beim Blick entlang der Rotationsachse 32 gesehen.

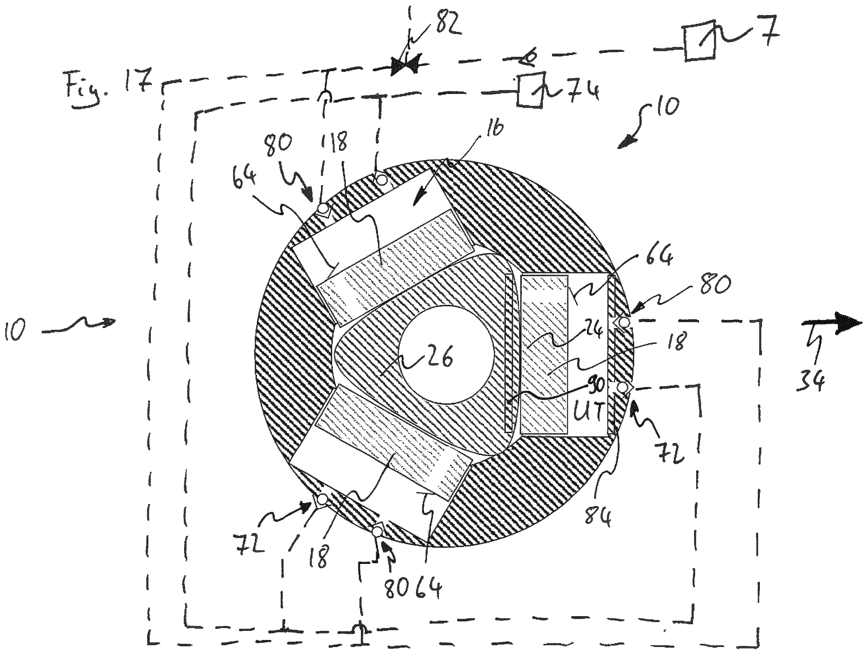

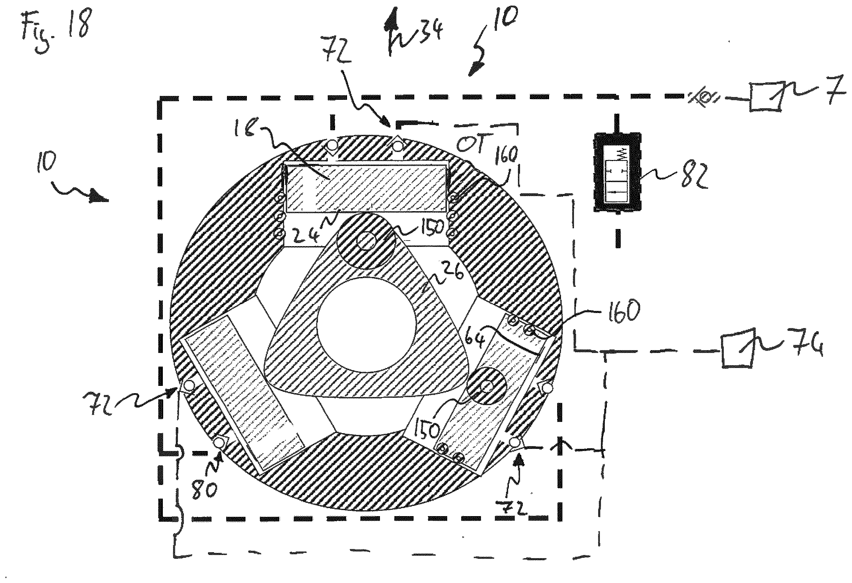

Figuren 17 und 18 zeigen weitere Ausführungsformen erfindungsgemäßer Verdichteranordnungen 10.

Die in Figur 17 und 18 gezeigten Ausführungsformen weisen plattenartig ausgebildete Verdichterbauteile 18 auf, die sich im Betrieb der Verdichteranordnung 10 oszillierend translatorisch in radialer Richtung 34 bewegen.

Die Verdichteranordnung 10 aus Figur 17 weist in dem radträgerseitigen Getriebeteil 26 jeweils Permanentmagneten 90 auf (von denen nur einer dargestellt ist), die dazu ausgebildet sind, die nabenseitigen Getriebeteile 24 in der Wirkstellung mit dem radträgerseitigen Getriebeteil 26 zu halten, sie stellen damit eine Einkoppeleinrichtung 41 dar.

Im Deckelabschnitt des Kompressionsraums 16 ist ebenso ein Permanentmagnet 84 angeordnet, der stärker als der Permanentmagneten 90 ausgebildet ist. Im Betrieb der Verdichteranordnung 10 wirkt das Druckmittel im Kompressionsraum 16 als pneumatische Feder (der Kompressionsraum 16 bildet einen Druckraum 25), die verhindert, dass das Verdichterbauteil 18 an dem Permanentmagneten 84 haftet. Um den Betrieb der Verdichteranordnung 10 zu stoppen, wird der Kompressionsraum 16 bzw. die Kompressionsräume 16 über das Ventil 82 druckentlastet. Das Verdichterbauteil 18 haftet dann an dem Permanentmagneten 84 und löst sich von dem radträgerseitigen Getriebeteil 26.

Die Verdichteranordnung 10 aus Figur 18 ist ähnlich der Verdichteranordnung 10 aus Figur 17 aufgebaut.

Die Verdichteranordnung 10 aus Figur 18 weist jedoch zum Einen Rollen 150 auf, die im Kontaktbereich zwischen radträgerseitigem Getriebeteil 26 und nabenseitigem Getriebeteil 24 angeordnet sind, zum Anderen weist die Verdichteranordnung 10 aus Figur 18 auch Rollen 160 auf, die im Kontaktbereich zwischen Verdichterbauteil 18 und der umfänglichen Wandung des Kompressionsraums 16 angeordnet sind. Dabei sind die Rollen 160 einmal an der Wandung des Kompressionsraums 16 (unten rechts) angeordnet und einmal an der Wandung des Verdichterbauteils 18 (oben Mitte).

Bei sämtlichen Ausführungsformen weist das Verdichterbauteil 18 eine umfängliche Dichtung auf, die es gegen die Wandung des Kompressionsraums 16 abdichtet.

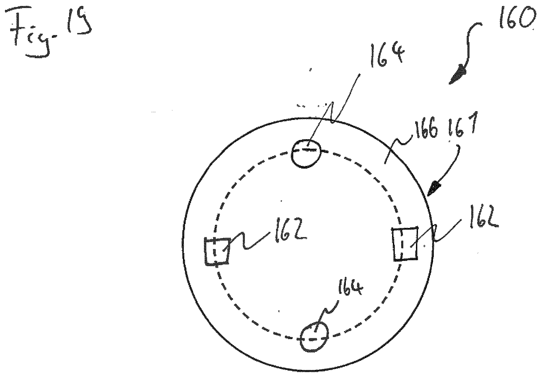

Figur 19 zeigt einen Teil einer schaltbaren Magnetanordnung 160 bei der eine Formation 161 von Permanentmagneten 162, 164 auf einer kreisscheibenartigen Platte 166 angeordnet ist.

Zwei Permanentmagneten 162 einer ersten Polungsart sind um 90° versetzt zu zwei Permanentmagneten 164 einer zweiten Polungsart angeordnet.

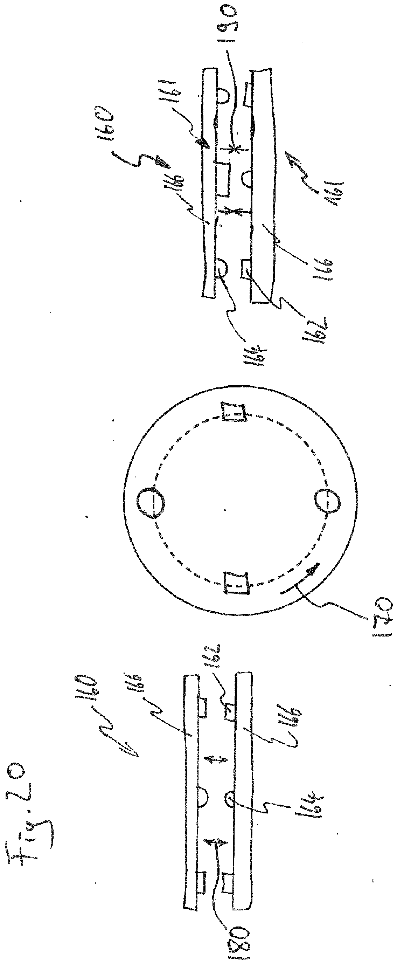

In Figur 20 sind die zwei auf kreisscheibenartigen Platten 166 angeordneten Formationen 161 von Permanentmagneten 162, 164 übereinander in einer Seitenansicht dargestellt. In der Mitte von Figur 20 ist eine Drehbewegung 170 von der links gezeigten Konfiguration in die rechts gezeigte Konfiguration über einen Pfeil dargestellt. Die Drehbewegung 170 betrifft dabei die obere kreissscheibenartige Platte 166.

In der linken Konfiguration stoßen sich die Formationen 161 von Permanentmagneten 162, 164 voneinander ab, was durch die Doppelpfeile 180 dargestellt ist. In der rechten Konfiguration ziehen sich die Formationen 161 von Permanentmagneten 162, 164 an, was durch die Doppelpfeile mit dem Bezugszeichen 190 dargestellt ist.

Eine derartige schaltbare Magnetanordnung 160 kann zur Realisierung einer schaltbaren magnetbasierten Entkoppeleinrichtung 39 und/oder zur Realisierung einer schaltbaren magnetbasierten Einkoppeleinrichtung 41 verwendet werden. Beispielsweise kann hierzu eine Formation 161 von Permanentmagneten 162, 164 dem Verdichterbauteil 18 angeordnet sein und eine zweite drehbar gelagerte Formation 161 von Permanentmagneten 162, 164 im Deckelabschnitt des Kompressionsraums 16. Über einen Steuerimpuls kann die zweite drehbar gelagerte Formation 161 von Permanentmagneten 162, 164 im Deckelabschnitt um 90° verdreht werden und so von anziehender auf abstoßende Wirkung bzw. umgekehrt geschaltet werden.

Eine ähnliche Konfiguration ist in der dem Deckelabschnitt gegenüberliegenden Wandung des Kompressionsraums 16 möglich.

## Patentansprüche

1. Verdichteranordnung (10) zur Druckmittelversorgung einer Reifenkavität (7) eines Reifens eines auf einer Radnabe (4), die um eine Rotationsachse (32) drehbar an einem Radträger (3) gelagert ist, montierbaren Fahrzeugrads, wobei die Verdichteranordnung (10) einen nabenseitigen Kompressionsraum (16) und ein Verdichterbauteil (18) umfasst, wobei ein in die Reifenkavität (7) zu leitendes Druckmittel in dem Kompressionsraum (16) durch oszillierende translatorische Bewegung des Verdichterbauteils (18) unter Druck setzbar ist, wobei die Verdichteranordnung (10) ein Getriebe (20), vorzugsweise ein Kurvengetriebe, umfasst, das eingerichtet ist, um eine Rotationsbewegung zwischen Radträgerseite und Radnabenseite in eine oszillierende translatorische Bewegung des Verdichterbauteils (18) umzuwandeln, wenn ein nabenseitiges Getriebeteil (24) mit einem radträgerseitigen Getriebeteil (26) in einer Wirkstellung steht, wobei das Verdichterbauteil (18) starr mit dem nabenseitigen Getriebeteil (24) verbunden ist,
**dadurch gekennzeichnet, dass**
die Verdichteranordnung (10) eine magnetbasierte Entkoppeleinrichtung (39) umfasst, über die das nabenseitige Getriebeteil (24) aus der Wirkstellung mit dem radträgerseitigen Getriebeteil (26) gehalten werden kann und/oder aus der Wirkstellung mit dem radträgerseitigen Getriebeteil (26) bringbar ist, und/oder
die Verdichteranordnung (10) eine magnetbasierte Einkoppeleinrichtung (41) umfasst, über die das nabenseitige Getriebeteil (24) in der Wirkstellung mit dem radträgerseitigen Getriebeteil (26) gehalten werden kann und/oder in die Wirkstellung mit dem radträgerseitigen Getriebeteil (26) bringbar ist,
wobei in dem Verdichterbauteil (18) ein Permanentmagnet (102) angeordnet ist oder wobei das Verdichterbauteil (18) ein ferromagnetisches Material umfasst, und/oder
wobei in einer umfänglichen Wandung des Kompressionsraums (16) wenigstens ein Permanentmagnet (100), vorzugsweise eine Reihe von Permanentmagneten (100), angeordnet ist.

2. Verdichteranordnung (10) nach einem oder mehreren der vorangegangenen Ansprüche,
**dadurch gekennzeichnet, dass**
in der Begrenzung des Kompressionsraums (16), vorzugsweise in einem den Kompressionsraum (16) begrenzenden Deckelabschnitt, ein Druckmittelauslass (76), der mit einem Totraumvolumen (120) des Kompressionsraums (16) verbunden ist, angeordnet ist, wobei der Druckmittelauslass (80) über einen Leitungsabschnitt (78), vorzugsweise in dem ein Rückschlagventil (80) angeordnet ist, mit der Reifenkavität (7) verbindbar ist, und wobei der Leitungsabschnitt (78) mit einem Entlastungsventil (82) verbunden ist, über das der Leitungsabschnitt (78) druckentlastbar ist.

3. Verdichteranordnung (10) nach einem oder mehreren der vorangegangenen Ansprüche,
**dadurch gekennzeichnet, dass**
ein Druckraum (25) mit einem Druckmitteleinlass (72) vorgesehen ist, wobei das Verdichterbauteil (18) derart einen Teil einer Begrenzung des Druckraums bildet, dass das Verdichterbauteil (18) durch Zuführung eines Druckstoßes in den Druckraum (25) bewegbar ist.

4. Verdichteranordnung (10) nach Anspruch 3,
**dadurch gekennzeichnet, dass**
der Druckraum (25) der Kompressionsraum (16) ist, oder
der Druckraum (25) pneumatisch getrennt von dem Kompressionsraum (16) ausgebildet ist, vorzugsweise wobei der Druckraum (25) in dem Verdichterbauteil (18) und/oder in dem nabenseitigen Getriebeteil (24) angeordnet ist.

5. Verdichteranordnung (10) nach einem oder mehreren der vorangegangenen Ansprüche,
**dadurch gekennzeichnet, dass**
ein, insbesondere stabartiges, Führungselement (110) sich in das Verdichterbauteil (18) erstreckt, vorzugsweise wobei der Druckmitteleinlass (72) an dem Führungselement (110) angeordnet ist, und/oder wenigstens zwei, insbesondere stabartige, Führungselemente (110) sich in das Verdichterbauteil (18) erstrecken.

6. Verdichteranordnung (10) nach Anspruch 5,
**dadurch gekennzeichnet, dass**
das in einem Führungselement (110) ein Zuleitungsabschnitt (112) verläuft, der in den Druckmitteleinlass (72) mündet, und/oder ein Führungselement (110) einen Teil der Begrenzung des Druckraums (25) bildet, und/oder
ein Führungselement (110) eine Verdrehsicherung (114) für das Verdichterbauteil (18) bildet, vorzugsweise wobei das Führungselement (110) einen unrunden, insbesondere ovalen Querschnitt aufweist.

7. Verdichteranordnung (10) nach einem oder mehreren der vorangegangenen Ansprüche,
**dadurch gekennzeichnet, dass**
die Entkoppeleinrichtung (39) und/oder die Einkoppeleinrichtung (41) ausgebildet und angeordnet ist, um über Magnetkraft das Verdichterbauteil (18) derart zu halten und/oder zu bewegen, dass die Stellung des nabenseitigen Getriebeteils (24) hierdurch beeinflussbar ist.

8. Verdichteranordnung (10) nach einem oder mehreren der vorangegangenen Ansprüche,
**dadurch gekennzeichnet, dass**
ein Translator (130) einer Generatoranordnung (140) vorgesehen ist, wobei die Generatoranordnung (140) durch oszillierende translatorische Bewegung des Translators (130) elektrische Energie erzeugt, wobei die Verdichteranordnung (10) ein Generatorgetriebe (135) umfasst, das eingerichtet ist, um eine Rotationsbewegung zwischen Radträgerseite und Radnabenseite in eine oszillierende translatorische Bewegung des Translators (130) umzuwandeln, wenn ein radträgerseitiges Generatorgetriebeteil (137) mit einem nabenseitigen Generatorgetriebeteil (139) in einer Wirkstellung steht, vorzugsweise wobei das Generatorgetriebe (135) unabhängig von dem Getriebe (20) betätigbar ist.

9. Verdichteranordnung (10) nach einem oder mehreren der vorangegangenen Ansprüche,
**dadurch gekennzeichnet, dass**
das Verdichterbauteil (18) plattenartig ausgebildet ist, vorzugsweise wobei eine Unterseite des plattenartigen Verdichterbauteil (18) das nabenseitige Getriebeteil (24) bildet, und/oder
das Verdichterbauteil (18) einstückig verbunden mit dem nabenseitigen Getriebeteil (24) ausgebildet ist.

10. Verdichteranordnung (10) nach einem oder mehreren der vorangegangenen Ansprüche,
**dadurch gekennzeichnet, dass**
das Verdichterbauteil (18) ausgebildet und angeordnet ist, um im Betrieb der Verdichteranordnung (10) sowohl mittels einer radial einwärts als auch mittels einer radial auswärts gerichteten Bewegung Druckmittel zu fördern.

11. Verdichteranordnung (10) nach einem oder mehreren der vorangegangenen Ansprüche,
**dadurch gekennzeichnet, dass**
an dem Verdichterbauteil (18) oder an der Begrenzung des Kompressionsraums (16) ein Flatterventil (64), derart angeordnet ist, dass es in einem Saughub des Verdichterbauteils (18) geöffnet ist und in einem Förderhub des Verdichterbauteils (18) geschlossen ist.

12. Verdichteranordnung (10) nach einem oder mehreren der vorangegangenen Ansprüche,
**dadurch gekennzeichnet, dass**
das radträgerseitige Getriebeteil (26) eine Scheibennutkurve (44) und/oder eine Scheibenwulstkurve, vorzugsweise mit einem Weichenabschnitt (46) und mit einer Arbeitsbahn (48) und einer Freilaufbahn (50), die über den Weichenabschnitt (46) verbunden sind, umfasst, und/oder an dem Verdichterbauteil (18) zwei Flatterventile (64) derart angeordnet sind, dass das eine Flatterventil (64) nach radial einwärts und das andere Flatterventil (64) nach radial auswärts öffenbar ist und das Verdichterbauteil (18) als Doppelkolben ausgebildet ist.

13. Verdichteranordnung (10) nach einem oder mehreren der vorangegangenen Ansprüche,
**dadurch gekennzeichnet, dass**
in dem radträgerseitigen Getriebeteil (26) ein Permanentmagnet (90) angeordnet ist oder, dass das radträgerseitige Getriebeteil (26) ein ferromagnetisches Material umfasst.

## Claims

1. A compressor assembly (10) for supplying a pressure medium to a tire cavity (7) of a tire of a vehicle wheel that is mountable on a wheel hub (4), which is rotatably supported about an axis of rotation (32) on a wheel carrier (3), wherein the compressor assembly (10) comprises a hub-side compression chamber (16) and a compressor component (18), wherein a pressure medium to be conducted into the tire cavity (7) can be subjected to pressure in the compression chamber (16) through oscillating translational movement of the compressor component (18), wherein the compressor assembly (10) comprises a gear (20), preferably a cam gear, which is set up in order to convert a rotational movement between the wheel carrier side and the wheel hub side into an oscillating translational movement of the compressor component (18) when a hub-side gear part (24) is in an operative position with a wheel carrier-side gear part (26), wherein the compressor component (18) is rigidly connected to the hub-side gear part (24), **characterized in that**
the compressor assembly (10) comprises a magnet-based decoupling device (39) via which the hub-side gear part (24) can be held out of the operative position with the wheel carrier-side gear part (26) and/or is moveable out of the operative position with the wheel carrier-side gear part (26), and/or
the compressor assembly (10) comprises a magnet-based coupling device (41) via which the hub-side gear part (24) can be held in the operative position with the wheel carrier-side gear part (26) and/or is moveable into the operative position with the wheel carrier-side gear part (26),
wherein a permanent magnet (102) is disposed in the compressor component (18), or wherein the compressor component (18) comprises a ferromagnetic material, and/or
wherein at least one permanent magnet (100), preferably a series of permanent magnets (100), is disposed in a circumferential wall of the compression chamber (16).

2. The compressor assembly (10) according to any of the preceding claims,
**characterized in that**
a pressure medium outlet (76) associated with a dead space volume (120) of the compression chamber (16) is disposed in the delimitation of the compression chamber (16), preferably in a lid section that delimits the compression chamber (16), wherein the pressure medium outlet (80) is connectable to the tire cavity (7) via a conduit section (78), preferably in which a check valve (80) is disposed, and wherein the conduit section (78) is connected to a relief valve (82) via which the conduit section (78) can be pressure-relieving.

3. The compressor assembly (10) according to any of the preceding claims,
**characterized in that**
a pressure chamber (25) having a pressure medium inlet (72) is provided, wherein the compressor component (18) forms a part of a delimitation of the pressure chamber such that the compressor component (18) is movable into the pressure chamber (25) via the feeding of a pressure surge.

4. The compressor assembly (10) according to claim 3, **characterized in that**
the pressure chamber (25) is the compression chamber (16), or the pressure chamber (25) is formed pneumatically separate from the compression chamber (16), preferably wherein the pressure chamber (25) is disposed in the compressor component (18) and/or in the hub-side gear section (24).

5. The compressor assembly (10) according to any of the preceding claims,
**characterized in that**
a guide element (110), in particular rod-like, extends into the compressor component (18), preferably wherein the pressure medium inlet (72) is disposed on the guide element (110), and/or
at least two, in particular rod-like, guide members (110) extend into the compressor component (18).

6. The compressor assembly (10) according to claim 5, **characterized in that**
a feed section (112) runs within a guide element (110) and opens up into the pressure medium inlet (72), and/or a guide element (110) forms a part of the delimitation of the pressure chamber (25), and/or
a guide element (110) forms an anti-rotation safety (114) for the compressor component (18), preferably wherein the guide element (110) has a non-circular, in particular oval, cross-section.

7. The compressor assembly (10) according to any of the preceding claims,
**characterized in that**
the decoupling device (39) and/or the coupling device (41) are formed and disposed in order to hold and/or move the compressor component (18) via magnetic force such that the position of the hub-side gear part (24) can thereby be influenced.

8. The compressor assembly (10) according to any of the preceding claims,
**characterized in that**
a translator (130) of a generator assembly (140) is provided, wherein the generator assembly (140) produces electrical energy via oscillating translational movement of the translator (130), wherein the compressor assembly (10) comprises a generator gear (135), which is set up in order to convert a rotational movement between the wheel carrier side and the wheel hub side into an oscillating translational movement of the translator (130) when a wheel carrier-side generator gear part (137) is in an operative position with a hub-side generator gear part (139), preferably wherein the generator gear (135) is actuatable independent of the gear (20).

9. The compressor assembly (10) according to any of the preceding claims,
**characterized in that**
the compressor component (18) is plate-like in form, preferably wherein a bottom of the plate-type compressor component (18) forms the hub-side gear part (24), and/or
the compressor component (18) is integrally connected to the hub-side gear part (24) in form.

10. The compressor assembly (10) according to any of the preceding claims,
**characterized in that**
the compressor component (18) is configured and disposed in order to convey pressure medium by means of both a radially inward and a radially outward motion in the operation of the compressor assembly (10).

11. The compressor assembly (10) according to any of the preceding claims,
**characterized in that**
a flutter valve (64) is disposed on the compressor component (18) or on the delimitation of the compression chamber (16) such that it is opened in a suction stroke of the compressor component (18) and closed in a conveyance stroke of the compressor component (18).

12. The compressor assembly (10) according to any of the preceding claims,
**characterized in that**
the wheel carrier-side gear part (26) comprises a disk groove cam (44) and/or a disk ridge cam, preferably having a point section (46) as well as a working path (48) and free travel path (50) connected via the point section (46), and/or
two flutter valves (64) are disposed on the compressor component (18) such that the one flapper valve (64) is openable radially inward and the other flapper valve (64) is openable radially outward and the compressor component (18) is formed as a double piston.

13. The compressor assembly (10) according to any of the preceding claims,
**characterized in that**
a permanent magnet (90) is disposed in the wheel carrier-side gear part (26), or that the wheel carrier-side gear part (26) comprises a ferromagnetic material.

## Revendications

1. Ensemble compresseur (10) pour la fourniture d'un agent de pression à une cavité de pneu (7) d'une roue de véhicule qui peut être montée sur un moyeu de roue (4), qui est supporté de manière rotative autour d'un axe de rotation (32) sur un support de roue (3), dans lequel l'ensemble compresseur (10) comprend une chambre de compression côté moyeu (16) et un élément de compresseur (18), dans lequel un agent de pression devant être conduit dans la cavité de pneu (7) peut être soumis à une pression dans la chambre de compression (16) à travers un mouvement translationnel d'oscillation de l'élément de compresseur (18), dans lequel l'ensemble compresseur (10) comprend un engrenage (20), de préférence un engrenage à came, qui est configuré afin de convertir un mouvement de rotation entre le côté de support de roue et le côté de moyeu de roue en un mouvement translationnel d'oscillation de l'élément de compresseur (18) lorsqu'une partie d'engrenage côté moyeu (24) est dans une position opérationnelle avec une partie d'engrenage côté support de roue (26), dans lequel l'élément de compresseur (18) est rigidement relié à la partie d'engrenage côté moyeu (24), **caractérisé en ce que**
l'ensemble compresseur (10) comprend un dispositif de découplage à base d'aimant (39) via lequel la partie d'engrenage côté moyeu (24) peut être maintenue hors de la position opérationnelle avec la partie d'engrenage côté support de roue (26) et/ou peut être déplacée hors de la position opérationnelle avec la partie d'engrenage côté support de roue (26), et/ou l'ensemble compresseur (10) comprend un dispositif de couplage à base d'aimant (41) via lequel la partie d'engrenage côté moyeu (24) peut être maintenue dans la position opérationnelle avec la partie d'engrenage côté support de roue (26) et/ou est mobile dans la position opérationnelle avec la partie d'engrenage côté support de roue (26),
dans lequel un aimant permanent (102) est disposé dans l'élément de compresseur (18), ou dans lequel l'élément de compresseur (18) comprend un matériau ferromagnétique, et/ou
dans lequel au moins un aimant permanent (100), de préférence une série d'aimants permanents (100), est disposé dans une paroi circonférentielle de la chambre de compression (16).

2. Ensemble compresseur (10) selon l'une quelconque des revendications précédentes,
**caractérisé en ce que**
une sortie d'agent de pression (76) associée à un volume d'espace mort (120) de la chambre de compression (16) est disposée dans la délimitation de la chambre de compression (16), de préférence dans une section de couvercle qui délimite la chambre de compression (16), dans lequel la sortie d'agent de pression (80) est repliable à la cavité de pneu (7) via une section de conduit (78), de préférence dans lequel un clapet de non-retour (80) est disposé, et dans lequel la section de conduit (78) est reliée à une soupape de décharge (82) via laquelle la section de conduit (78) peut être de décharge de pression.

3. Ensemble compresseur (10) selon l'une quelconque des revendications précédentes,
**caractérisé en ce que**
une chambre de pression (25) ayant une entrée d'agent de pression (72) est fournie, dans laquelle l'élément de compresseur (18) forme une partie d'une délimitation de la chambre de pression de sorte que l'élément de compresseur (18) est mobile dans la chambre de pression (25) via l'alimentation d'une surpression.

4. Ensemble compresseur (10) selon la revendication 3, **caractérisé en ce que**
la chambre de pression (25) est la chambre de compression (16), ou la chambre de pression (25) est formée pneumatiquement séparée de la chambre de compression (16), de préférence dans laquelle la chambre de pression (25) est disposée dans l'élément de compresseur (18) et/ou dans la section d'engrenage côté moyeu (24).

5. Ensemble compresseur (10) selon l'une quelconque des revendications précédentes,
**caractérisé en ce que**
un élément de guidage (110), en particulier en forme de tige, s'étend dans l'élément de compresseur (18), de préférence dans lequel l'entrée d'agent de pression (72) est disposée sur l'élément de guidage (110), et/ou au moins deux éléments de guidage (110) en particulier en forme de tige s'étendent dans l'élément de compresseur (18).

6. Ensemble compresseur (10) selon la revendication 5, **caractérisé en ce que**
une section d'alimentation (112) s'étend à l'intérieur d'un élément de guidage (110) et débouche dans l'entrée d'agent de pression (72) et/ou
un élément de guidage (110) forme une partie de la délimitation de la chambre de pression (25), et/ou un élément de guidage (110) forme une sécurité anti-rotation (114) pour l'élément de compresseur (18), de préférence dans lequel l'élément de guidage (110) a une section transversale non circulaire, en particulier ovale.

7. Ensemble compresseur (10) selon l'une quelconque des revendications précédentes,
**caractérisé en ce que**
le dispositif de découplage (39) et/ou le dispositif de couplage (41) sont formés et disposés afin de maintenir et/ou déplacer l'élément de compresseur (18) via une force magnétique de sorte que la position de la partie d'engrenage côté moyeu (24) peut ainsi être influencée.

8. Ensemble compresseur (10) selon l'une quelconque des revendications précédentes,
**caractérisé en ce que**
un translateur (130) d'un ensemble générateur (140) est fourni, dans lequel l'ensemble générateur (140) produit de l'énergie électrique via un mouvement translationnel d'oscillation du translateur (130), dans lequel l'ensemble compresseur (10) comprend un engrenage de générateur (135), qui est configuré afin de convertir un mouvement de rotation entre le côté support de roue et le côté moyeu de roue en un mouvement translationnel d'oscillation du translateur (130) lorsqu'une partie d'engrenage de générateur côté support de roue (137) est dans une position opérationnelle avec une partie d'engrenage de générateur côté moyeu (139), dans lequel de préférence l'engrenage de générateur (135) peut être actionné indépendamment de l'engrenage (20).

9. Ensemble compresseur (10) selon l'une quelconque des revendications précédentes,
**caractérisé en ce que**
l'élément de compresseur (18) est de type de plaque dans la forme, dans lequel de préférence un fond de l'élément de compresseur de type plaque (18) forme la partie d'engrenage côté moyeu (24), et/ou l'élément de compresseur (18) est intégralement relié à la partie d'engrenage côté moyeu (24) dans la forme.

10. Ensemble compresseur (10) selon l'une quelconque des revendications précédentes,
**caractérisé en ce que**
l'élément de compresseur (18) est configuré et disposé afin de transporter un agent de pression à la fois au moyen d'un mouvement radialement vers l'intérieur et d'un mouvement radialement vers l'extérieur lors du fonctionnement de l'ensemble compresseur (10).

11. Ensemble compresseur (10) selon l'une quelconque des revendications précédentes,
**caractérisé en ce que**
une soupape flottante (64) est disposée sur l'élément de compresseur (18) ou sur la délimitation de la chambre de compression (16) de telle sorte qu'elle est ouverte dans une course d'aspiration de l'élément de compresseur (18) et fermée dans une course de transport de l'élément de compresseur (18).

12. Ensemble compresseur (10) selon l'une quelconque des revendications précédentes,
**caractérisé en ce que**
la partie d'engrenage côté support de roue (26) comprend une came de rainure de disque (44) et/ou une came de crête de disque, ayant de préférence une section de point (46) ainsi qu'un chemin de travail (48) et un chemin de déplacement libre (50) reliés via la section de point (46), et/ou
deux soupapes flottantes (64) sont disposées sur l'élément de compresseur (18) de sorte qu'une soupape à clapet (64) peut être ouverte radialement vers l'intérieur et l'autre soupape à clapet (64) peut être ouverte radialement vers l'extérieur et l'élément de compresseur (18) est formé comme un piston double.

13. Ensemble compresseur (10) selon l'une quelconque des revendications précédentes,
**caractérisé en ce que**
un aimant permanent (90) est disposé dans la partie d'engrenage côté support de roue (26), ou que la partie d'engrenage côté support de roue (26) comprend un matériau ferromagnétique.
